(19)

Europäisches
Patentamt
European
Patent Office
Office européen
des brevets

(11) **EP 4 064 595 A1**

(12) **EUROPEAN PATENT APPLICATION**
published in accordance with Art. 153(4) EPC

(43) Date of publication:
**28.09.2022 Bulletin 2022/39**

(21) Application number: **20908359.1**

(22) Date of filing: **24.12.2020**

(51) International Patent Classification (IPC):
*H04L 1/00* (2006.01)          *H04L 1/18* (2006.01)
*H04L 5/00* (2006.01)

(52) Cooperative Patent Classification (CPC):
**H04L 1/00; H04L 1/18; H04L 5/00**

(86) International application number:
**PCT/KR2020/019128**

(87) International publication number:
**WO 2021/133113 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2019 KR 20190176598**

(71) Applicant: **Samsung Electronics Co., Ltd.
Gyeonggi-do, 16677 (KR)**

(72) Inventors:
• **MYUNG, Seho
Suwon-si Gyeonggi-do 16677 (KR)**
• **YEO, Jeongho
Suwon-si Gyeonggi-do 16677 (KR)**
• **BANG, Jonghyun
Suwon-si Gyeonggi-do 16677 (KR)**
• **KIM, Younsun
Suwon-si Gyeonggi-do 16677 (KR)**

(74) Representative: **Gulde & Partner
Patent- und Rechtsanwaltskanzlei mbB
Wallstraße 58/59
10179 Berlin (DE)**

(54) **APPARATUS AND METHOD FOR TRANSMITTING AND RECEIVING DATA AND CONTROL SIGNAL IN COMMUNICATION SYSTEM**

(57)     Disclosed are a communication technique which merges, with IoT technology, a 5G communication system for supporting a data transmission rate higher than that of a 4G system, and a system therefor. The present disclosure can be applied to intelligent services (for example, smart homes, smart buildings, smart cities, smart cars or connected cars, healthcare, digital education, retail, security- and safety-related services, and the like) on the basis of 5G communication technology and IoT-related technology. A method for a terminal of a communication system may comprise the steps of: receiving, from a base station, information indicating LBRM; identifying a parameter related to the maximum number of layers for one transport block; identifying the maximum number of layers for the one transport block on the basis of the parameter; identifying a transport block size to which the LBRM is applied, on the basis of the determined maximum number of layers; and transmitting or receiving data to or from the base station on the basis of the transport block size.

FIG. 1

EP 4 064 595 A1

**Description**

[Technical Field]

The disclosure generally relates to a communication system, and more particularly, to a method and apparatus for transmitting and receiving data and control information in a communication system.

[Background Art]

In order to satisfy increases in demand for wireless data traffic now that a 4G communication system is commercially available, efforts are being made to develop an enhanced 5G communication system or a pre-5G communication system. Therefore, a 5G communication system or a pre-5G communication system is referred to as a beyond 4G network communication system or a post long term evolution (LTE) system.

In order to achieve a high data transmission rate, consideration is being given to implementing the 5G communication system in a mmWave band (e.g., 60 GHz band). In order to mitigate any route loss of electronic waves in a mmWave band and to increase transmission distances of electronic waves, the technologies of beamforming, massive multiple input and multiple output (MIMO), full dimensional MIMO (FD-MIMO), array antenna, analog beamforming, and large scale antenna are being discussed for the 5G communication system.

Further, in order to enhance networks in the 5G communication system, the technologies of an innovative small cell, advanced small cell, cloud radio access network (cloud RAN), ultra-dense network, device to device communication (D2D), wireless backhaul, moving network, cooperative communication, coordinated multi-points (CoMP), and interference cancellation are being developed.

Further, hybrid frequency shift keying and quadrature amplitude modulation (FQAM) and sliding window superposition coding (SWSC), which are advanced coding modulation (ACM) methods; and filter bank multi carrier (FBMC), non-orthogonal multiple access (NOMA), and sparse code multiple access (SCMA), which are advanced access technologies, are being developed for the 5G system.

As a wireless communication system develops, as in a 5G system, it is expected to be able to provide various services. Accordingly, there is a need for a method for smoothly providing these services.

[Disclosure of Invention]

[Technical Problem]

Based on the above discussion, the disclosure provides an apparatus and method for effectively determining the size of a transport block in a wireless or wired communication system.

Further, the disclosure provides an apparatus and method for effectively determining the size of a code block in a wireless or wired communication system.

Further, the disclosure provides an apparatus and method for effectively performing rate matching in a wireless or wired communication system.

Further, the disclosure provides an apparatus and method for limiting transmittable parity bits in a wireless or wired communication system.

[Solution to Problem]

According to an embodiment of the disclosure for achieving the above-described technical problem, a method performed by a terminal of a communication system may include receiving, from a base station, information indicating limited buffer rate matching (LBRM); identifying a parameter related to the maximum number of layers for one transport block; identifying the maximum number of layers for the one transport block based on the parameter; identifying a transport block size (TBS) to which the LBRM is applied based on the determined maximum number of layers; and transmitting or receiving data to or from the base station based on the TBS, wherein the parameter may be identified based on at least one of a first maximum number of multiple-input-multiple-output (MIMO) layers configured to correspond to a serving cell or a second maximum number of MIMO layers configured to correspond to a bandwidth part (BWP). According to an embodiment, in case that the first maximum number of MIMO layers and the second maximum number of MIMO layers are not configured, the parameter may be identified as a maximum value of a maximum rank configured for each BWP of the serving cell.

According to an embodiment, in case that the first maximum number of MIMO layers and the second maximum number of MIMO layers are not configured, and that a maximum rank is not configured for each BWP of the serving cell, the parameter may be identified as the maximum number of layers supported by the terminal for a channel through which the data is transmitted or received in the serving cell.

According to an embodiment, in case that the transport block is related to an uplink, the maximum number of layers for one transport block may be identified as the same value as that of the parameter, and in case that the transport block is related to a downlink, the maximum number of layers for the one transport block may be identified to the smaller of the parameter and 4.

According to an embodiment of the disclosure, a method performed by a base station of a communication system may include transmitting, to a terminal, information indicating limited buffer rate matching (LBRM); identifying a parameter related to the maximum number of layers for one transport block; identifying the maximum number of layers for one transport block based on the parameter; identifying a transport block size (TBS) to which the LBRM is applied based on the determined maximum number of layers; and transmitting or receiving data to or from the terminal based on the TBS, wherein the parameter may be identified based on at least one of a first maximum number of multiple-input-multiple-output (MIMO) layers configured to correspond to a serving cell or a second maximum number of MIMO layers configured to correspond to a bandwidth part (BWP).

According to an embodiment of the disclosure, a terminal of a communication system may include a transceiver; and a controller configured to receive information indicating limited buffer rate matching (LBRM) from a base station, to identify a parameter related to the maximum number of layers for one transport block, to identify the maximum number of layers for one transport block based on the parameter, to identify a transport block size (TBS) to which the LBRM is applied based on the determined maximum number of layers, and to transmit or receive data to or from the base station based on the TBS, wherein the parameter may be identified based on at least one of a first maximum number of multiple-input-multiple-output (MIMO) layers configured to correspond to a serving cell or a second maximum number of MIMO layers configured to correspond to a bandwidth part (BWP).

According to an embodiment of the disclosure, a base station of a communication system may include a transceiver; and a controller configured to transmit information indicating limited buffer rate matching (LBRM) to a terminal, to identify a parameter related to the maximum number of layers for one transport block, to identify the maximum number of layers for one transport block based on the parameter, to identify a transport block size (TBS) to which the LBRM is applied based on the determined maximum number of layers, and to transmit or receive data to or from the terminal based on the TBS, wherein the parameter may be identified based on at least one of a first maximum number of multiple-input-multiple-output (MIMO) layers configured to correspond to a serving cell or a second maximum number of MIMO layers configured to correspond to a bandwidth part (BWP).

[Advantageous Effects of Invention]

An apparatus and method according to various embodiments of the disclosure can effectively perform rate matching using limited parity bits.

Effects obtainable in the disclosure are not limited to the above-mentioned effects, and other effects not mentioned will be clearly understood by those of ordinary skill in the art to which the disclosure belongs from the description below.

[Brief Description of Drawings]

FIG. 1 is a diagram illustrating a wireless communication system according to various embodiments of the disclosure.
FIG. 2 is a block diagram illustrating a configuration of a base station in a wireless communication system according to various embodiments of the disclosure.
FIG. 3 is a block diagram illustrating a configuration of a terminal in a wireless communication system according to various embodiments of the disclosure.
FIG. 4 is a block diagram illustrating a configuration of a communication unit in a wireless communication system according to various embodiments of the disclosure.
FIG. 5 is a diagram illustrating a resource structure in a time-frequency domain in a wireless communication system according to various embodiments of the disclosure.
FIG. 6A is a diagram illustrating an example of allocation of data for each service to a frequency-time resource in a wireless communication system according to various embodiments of the disclosure.
FIG. 6B is a diagram illustrating another example of allocating data for each service to a frequency-time resource in a wireless communication system according to various embodiments of the disclosure.
FIG. 7 is a diagram illustrating a data encoding method in a wireless communication system according to various embodiments of the disclosure.
FIG. 8 is a diagram illustrating an example of using an outer code in a wireless communication system according to various embodiments of the disclosure.

FIGS. 9A and 9B are block diagrams illustrating configurations of a transmitter and a receiver using an outer code in a wireless communication system according to various embodiments of the disclosure.

FIG. 10 is a diagram illustrating an example of a process in which one transport block (TB) is encoded in a wireless communication system according to various embodiments of the disclosure.

FIG. 11 is a flowchart of a terminal for transmitting or receiving data in a wireless communication system according to various embodiments of the disclosure.

FIG. 12 is a diagram illustrating an example of a range of transmittable bits according to limited buffer rate matching (LBRM) in a wireless communication system according to various embodiments of the disclosure.

FIG. 13 is a flowchart of a terminal for determining the maximum number of layers in a wireless communication system according to various embodiments of the disclosure.

FIG. 14 is another flowchart of a terminal for determining the maximum number of layers in a wireless communication system according to various embodiments of the disclosure.

FIG. 15 is a diagram illustrating an example of a section in which ambiguity of parameters required to perform LBRM occurs in a wireless communication system according to various embodiments of the disclosure.

FIG. 16 is another flowchart of a terminal for determining the maximum number of layers in a wireless communication system according to various embodiments of the disclosure.

[Mode for the Invention]

Terms used in the disclosure are used only for describing specific embodiments, and may not be intended to limit the scope of other embodiments. The singular expression may include the plural expression unless the context clearly dictates otherwise. Terms used herein, including technical or scientific terms, may have the same meanings as commonly understood by one of ordinary skill in the art described in the disclosure. Among the terms used in the disclosure, terms defined in a general dictionary may be interpreted with the same or similar meaning as the meaning in the context of the related art, and unless explicitly defined in the disclosure, it is not to be construed in an ideal or overly formal sense. In some cases, even terms defined in the disclosure cannot be construed to exclude embodiments of the disclosure.

In various embodiments of the disclosure described below, a hardware approach method will be described as an example. However, because various embodiments of the disclosure include technology using both hardware and software, various embodiments of the disclosure do not exclude a softwarebased approach. Further, although various embodiments of the disclosure describe a wireless communication system as an example, use in a wired communication system is not excluded.

Hereinafter, the disclosure relates to an apparatus and method for transmitting and receiving data and control information in a wireless communication system. Specifically, the disclosure indicates information on the band set assumed by the base station to the terminal according to capability information of the terminal, and describes how the terminal uses configuration information from the base station to calculate transmission and reception parameters.

A term referring to a signal, a term referring to a channel, a term referring to control information, a term referring to network entities, and a term referring to components of devices used in the following description are exemplified for convenience of description. Accordingly, the disclosure is not limited to the terms described below, and other terms having equivalent technical meanings may be used. For example, in the disclosure, a peak data rate and a max data rate may be used interchangeably.

In the following description, a physical channel and a signal may be used interchangeably with data or a control signal. For example, although a physical downlink shared channel (PDSCH) is a term referring to a physical channel through which data is transmitted, the PDSCH may be used for referring to data.

Hereinafter, in the disclosure, higher signaling refers to a method of transmitting a signal from a base station to a terminal using a downlink data channel of a physical layer or from a terminal to a base station using an uplink data channel of a physical layer. Higher signaling may be understood as radio resource control (RRC) signaling or an MAC control element (CE).

Further, in the disclosure, in order to determine whether a specific condition is satisfied or fulfilled, an expression of more than or less than has been used, but this is only a description for expressing an example, and does not exclude a description of a specific number or more or a specific number or lower. Conditions described as a 'specific number or more' may be replaced with 'more than a specific number', conditions described as a 'specific number or lower' may be replaced with 'less than a specific number', and conditions described as a 'specific number or more and less than a specific number' may be replaced with 'more than a specific number and a specific number or lower'.

Further, although the disclosure describes various embodiments using terms used in some communication standards (e.g., 3rd generation partnership project (3GPP)), this is only an example for description. Various embodiments of the disclosure may be easily modified and applied in other communication systems.

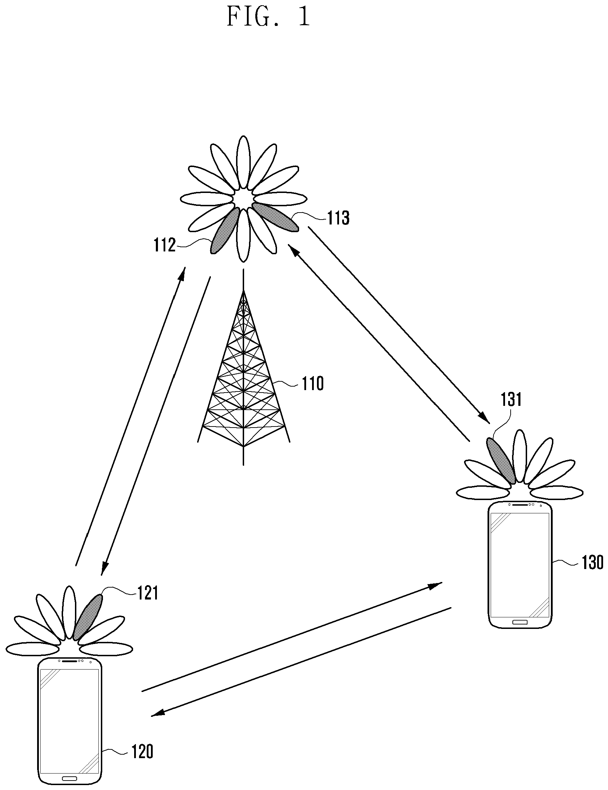

FIG. 1 is a diagram illustrating a wireless communication system according to various embodiments of the disclosure.

FIG. 1 illustrates a base station 110, a terminal 120, and a terminal 130 as some of nodes using a wireless channel in a wireless communication system. FIG. 1 illustrates only one base station, but other base stations that are the same as or similar to the base station 110 may be further included.

The base station 110 is a network infrastructure that provides wireless access to the terminals 120 and 130. The base station 110 has coverage defined as a predetermined geographic area based on a distance capable of transmitting a signal. In addition to the base station, the base station 110 may be referred to as an 'access point (AP)', 'eNodeB (eNB)', '5th generation node (5G node)', 'next generation nodeB (gNB)', 'wireless point', 'transmission/reception point (TRP)', or other terms having an equivalent technical meaning.

Each of the terminal 120 and the terminal 130 is a device used by a user, and performs communication with the base station 110 through a wireless channel. A link from the base station 110 to the terminal 120 or the terminal 130 is referred to as a downlink (DL), and a link from the terminal 120 or the terminal 130 to the base station 110 is referred to as an uplink (UL). In some cases, at least one of the terminal 120 or the terminal 130 may be operated without the user's involvement. That is, at least one of the terminal 120 or the terminal 130 is a device that performs machine type communication (MTC) and may not be carried by the user. Each of the terminals 120 and 130 may be referred to as a 'user equipment (UE)', 'mobile station', 'subscriber station', 'remote terminal, 'wireless terminal', or 'user device' other than the terminal or other terms having an equivalent technical meaning.

The base station 110, the terminal 120, and the terminal 130 may transmit and receive radio signals in mm Wave bands (e.g., 28 GHz, 30 GHz, 38 GHz, and 60 GHz). In this case, in order to improve a channel gain, the base station 110, the terminal 120, and the terminal 130 may perform beamforming. Here, beamforming may include transmission beamforming and reception beamforming. That is, the base station 110, the terminal 120, and the terminal 130 may impart directivity to a transmission signal or a reception signal. To this end, the base station 110 and the terminals 120 and 130 may select serving beams 112, 113, 121, and 131 through a beam search or beam management procedure. After the serving beams 112, 113, 121, and 131 are selected, subsequent communication may be performed through a resource in a quasi copositioned (QCL) relationship with the resource that has transmitted the serving beams 112, 113, 121, and 131.

If large-scale characteristics of a channel that has transmitted a symbol on a first antenna port may be inferred from a channel that has transmitted a symbol on a second antenna port, the first antenna port and the second antenna port may be evaluated to be in a QCL relationship. For example, large-scale characteristics may include at least one of delay spread, Doppler spread, Doppler shift, average gain, average delay, or spatial receiver parameter.

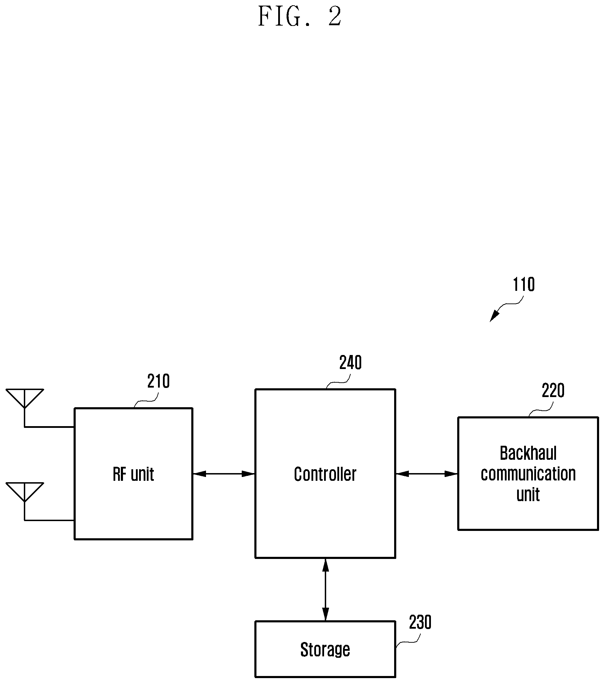

FIG. 2 is a block diagram illustrating a configuration of a base station in a wireless communication system according to various embodiments of the disclosure.

The configuration illustrated in FIG. 2 may be understood as a configuration of the base station 110. Terms such as '... unit', '... 'device' used hereinafter mean a unit that processes at least one function or operation, which may be implemented into hardware or software, or a combination of hardware and software.

With reference to FIG. 2, the base station includes a RF unit 210, a backhaul communication unit 220, a storage 230, and a controller 240.

The RF unit 210 performs functions for transmitting and receiving signals through a wireless channel. For example, the RF unit 210 may perform a function of converting between a baseband signal and a bit string according to a physical layer standard of a system. For example, when transmitting data, the RF unit 210 may encode and modulate the transmitted bit string to generate complex symbols. Further, when receiving data, the RF unit 210 may restore the received bit string through demodulation and decoding of the baseband signal.

Further, the RF unit 210 up-converts the baseband signal into a radio frequency (RF) band signal, transmits the RF band signal through the antenna, and down-converts the RF band signal received through the antenna into a baseband signal. To this end, the RF unit 210 may include a transmission filter, a reception filter, an amplifier, a mixer, an oscillator, a digital to analog converter (DAC), an analog to digital converter (ADC), and the like. Further, the RF unit 210 may include a plurality of transmission and reception paths. Furthermore, the RF unit 210 may include at least one antenna array configured with a plurality of antenna elements.

In terms of hardware, the RF unit 210 may be configured with a digital unit and an analog unit, and the analog unit may be configured with a plurality of sub-units according to operating power, operating frequency, and the like. The digital unit may be implemented into at least one processor (e.g., digital signal processor (DSP)).

The RF unit 210 transmits and receives signals, as described above. Accordingly, all or part of the RF unit 210 may be referred to as a 'transmitter', 'receiver', or 'transceiver'. Further, in the following description, transmission and reception performed through a wireless channel are used in the meaning including the processing being performed as described above by the RF unit 210.

The backhaul communication unit 220 provides an interface for performing communication with other nodes in the network. That is, the backhaul communication unit 220 converts a bit string transmitted from the base station to another node, for example, another access node, another base station, upper node, core network, and the like into a physical signal, and converts a physical signal received from the other node to a bit string.

The storage 230 stores data such as a basic program, an application program, and configuration information for the operation of the base station. The storage 230 may be configured with a volatile memory, a non-volatile memory, or a combination of a volatile memory and a non-volatile memory. Further, the storage 230 provides stored data according to the request of the controller 240.

The controller 240 controls overall operations of the base station. For example, the controller 240 may transmit and receive a signal through the RF unit 210 or through the backhaul communication unit 220. Further, the controller 240 writes and reads data in the storage 230. Further, the controller 240 may perform functions of a protocol stack required by the communication standard. According to another implementation example, the protocol stack may be included in the RF unit 210. To this end, the controller 240 may include at least one processor. According to various embodiments, the controller 240 may control the base station to perform operations according to various embodiments to be described later.

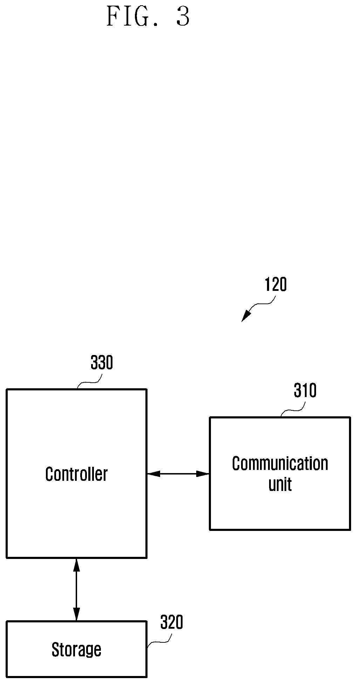

FIG. 3 is a block diagram illustrating a configuration of a terminal in a wireless communication system according to various embodiments of the disclosure.

The configuration illustrated in FIG. 3 may be understood as a configuration of the terminal 120. Terms such as '... unit', '... 'device' used hereinafter mean a unit that processes at least one function or operation, which may be implemented into hardware or software, or a combination of hardware and software.

With reference to FIG. 3, the terminal includes a communication unit 310, a storage 320, and a controller 330.

The communication unit 310 performs functions for transmitting and receiving signals through a wireless channel. For example, the communication unit 310 may perform a function of converting between a baseband signal and a bit string according to a physical layer standard of a system. For example, when transmitting data, the communication unit 310 may encode and modulate the transmitted bit string to generate complex symbols. Further, when receiving data, the communication unit 310 may demodulate and decode the baseband signal to restore the received bit string. Further, the communication unit 310 up-converts the baseband signal into an RF band signal, transmits the RF band signal through the antenna, and down-converts the RF band signal received through the antenna into a baseband signal. For example, the communication unit 310 may include a transmission filter, a reception filter, an amplifier, a mixer, an oscillator, a DAC, an ADC, and the like.

Further, the communication unit 310 may include a plurality of transmission and reception paths. Furthermore, the communication unit 310 may include at least one antenna array configured with a plurality of antenna elements. In terms of hardware, the communication unit 310 may be configured with a digital circuit and an analog circuit (e.g., radio frequency integrated circuit (RFIC)). Here, the digital circuit and the analog circuit may be implemented into one package. Further, the communication unit 310 may include a plurality of RF chains. Furthermore, the communication unit 310 may perform beamforming.

The communication unit 310 transmits and receives signals, as described above. Accordingly, all or part of the communication unit 310 may be referred to as a 'transmitter', 'receiver', or 'transceiver'. Further, in the following description, transmission and reception performed through a wireless channel are used in the meaning including the processing being performed as described above by the communication unit 310.

The storage 320 stores data such as a basic program, an application program, and configuration information for the operation of the terminal. The storage 320 may be configured with a volatile memory, a non-volatile memory, or a combination of a volatile memory and a non-volatile memory. Further, the storage 320 provides the stored data according to the request of the controller 330.

The controller 330 controls overall operations of the terminal. For example, the controller 330 may transmit and receive a signal through the communication unit 310. Further, the controller 330 writes and reads data in the storage 320. Further, the controller 330 may perform functions of a protocol stack required by the communication standard. To this end, the controller 330 may include at least one processor or microprocessor or may be a part of the processor. Further, a part of the communication unit 310 and the controller 330 may be referred to as a communication processor (CP). According to various embodiments, the controller 330 may control the terminal to perform operations according to various embodiments to be described later.

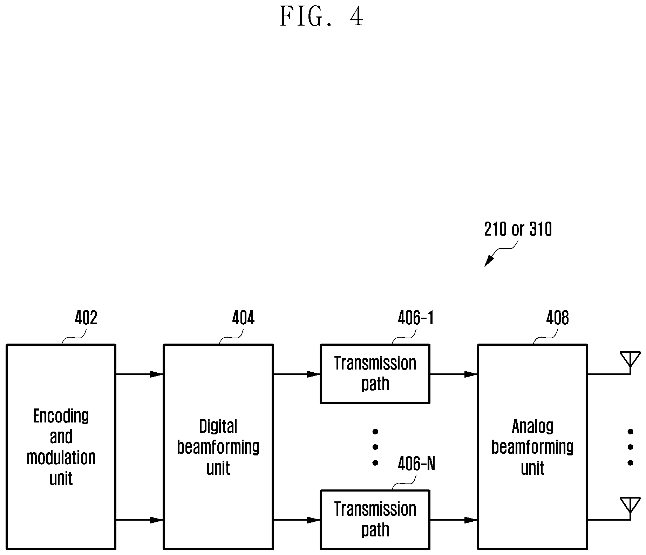

FIG. 4 is a block diagram illustrating a configuration of a communication unit in a wireless communication system according to various embodiments of the disclosure.

FIG. 4 illustrates an example of a detailed configuration of the RF unit 210 of FIG. 2 or the communication unit 310 of FIG. 3. Specifically, FIG. 4 illustrates components for performing beamforming as a part of the RF unit 210 of FIG. 2 or the communication unit 310 of FIG. 3.

With reference to FIG. 4, the RF unit 210 or the communication unit 310 includes an encoding and modulation unit 402, a digital beamforming unit 404, a plurality of transmission paths 406-1 to 406-N, and an analog beamforming unit 408.

The encoding and modulation unit 402 performs channel encoding. For channel encoding, at least one of a low density parity check (LDPC) code, a convolution code, or a polar code may be used. The encoding and modulation unit 402 performs constellation mapping to generate modulation symbols.

The digital beamforming unit 404 performs beamforming on a digital signal (e.g., modulation symbols). To this end, the digital beamforming unit 404 multiplies modulation symbols by beamforming weights. Here, the beamforming weights are used for changing the magnitude and phase of a signal, and may be referred to as a 'precoding matrix', a 'precoder', or the like. The digital beamforming unit 404 outputs digital beamformed modulation symbols to a plurality of transmission paths 406-1 to 406-N. In this case, according to a multiple input multiple output (MIMO) transmission technique, modulation symbols may be multiplexed or the same modulation symbols may be provided to the plurality of transmission paths 406-1 to 406-N.

The plurality of transmission paths 406-1 to 406-N convert digital beamformed digital signals into analog signals. To this end, each of the plurality of transmission paths 406-1 to 406-N may include an inverse fast Fourier transform (IFFT) operation unit, a cyclic prefix (CP) insertion unit, a DAC, and an upconversion unit. The CP insertion unit is for an orthogonal frequency division multiplexing (OFDM) method, and may be excluded in case that another physical layer method (e.g., filter bank multi-carrier (FBMC)) is applied. That is, the plurality of transmission paths 406-1 to 406-N provide independent signal processing processes for a plurality of streams generated through digital beamforming. However, according to an implementation method, some of components of the plurality of transmission paths 406-1 to 406-N may be used in common.

The analog beamforming unit 408 performs beamforming on an analog signal. To this end, the digital beamforming unit 404 multiplies the analog signals by beamforming weights. Here, the beamforming weights are used for changing the magnitude and phase of the signal. Specifically, the analog beamforming unit 408 may be variously configured according to a connection structure between the plurality of transmission paths 406-1 to 406-N and antennas. For example, each of the plurality of transmission paths 406-1 to 406-N may be connected to one antenna array. As another example, the plurality of transmission paths 406-1 to 406-N may be connected to one antenna array. As another example, the plurality of transmission paths 406-1 to 406-N may be adaptively connected to one antenna array or two or more antenna arrays.

The communication system is evolving from providing an initial voice-oriented service to a broadband wireless communication system that provides high-speed and high-quality packet data services as in communication standards such as high speed packet access (HSPA), long term evolution (LTE), or evolved universal terrestrial radio access (E-UTRA) of 3GPP, LTE-A (advanced), high rate packet data (HRPD), ultra mobile broadband (UMB) of 3GPP2, and 802.16e of IEEE. Further, as a 5G wireless communication system, a communication standard of 5G or NR (new radio) is being made.

The NR system employs an orthogonal frequency division multiplexing (OFDM) scheme in a downlink (DL) and uplink. More specifically, a cyclic-prefix OFDM (CP-OFDM) scheme in a downlink and a discrete Fourier transform spreading OFDM (DFT-S-OFDM) scheme along with CP-OFDM in an uplink are employed. The uplink refers to a radio link through which the terminal transmits data or control signals to the base station, and the downlink refers to a radio link through which the base station transmits data or control signals to the terminal. The multiple access method divides data or control information of each user by allocating and operating time-frequency resources in which data or control information is to be in general transmitted for each user so that they do not overlap each other, that is, orthogonality is established.

The NR system employs a hybrid automatic repeat request (HARQ) scheme of retransmitting corresponding data in the physical layer in case that a decoding failure occurs in initial transmission. According to the HARQ scheme, in case that the receiver fails to accurately decode data, the receiver transmits a negative acknowledgment (NACK), which is information notifying the transmitter of a decoding failure, so that the transmitter may retransmit the corresponding data in the physical layer. By combining data retransmitted by the transmitter with data that has previously failed to decode, the receiver may improve a data reception performance. Further, in case that the receiver accurately decodes data, by transmitting an acknowledgment (ACK), which is information notifying the transmitter of decoding success, the receiver may enable the transmitter to transmit new data.

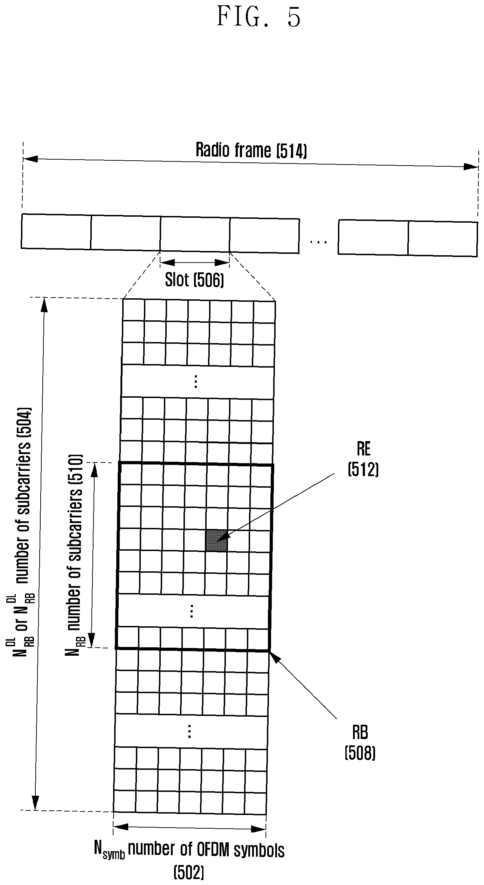

FIG. 5 is a diagram illustrating a resource structure in a time-frequency domain in a wireless communication system according to various embodiments of the disclosure.

FIG. 5 illustrates a basic structure of a time-frequency domain, which is a radio resource domain in which data or a control channel is transmitted in downlink or uplink.

In FIG. 5, a horizontal axis represents a time domain, and a vertical axis represents a frequency domain. A minimum transmission unit in the time domain is an OFDM symbol, and the $N_{symb}$ number of OFDM symbols 502 are gathered to constitute one slot 506. A length of a subframe is defined to 1.0ms, and a length of a radio frame 514 is defined to 10ms. A minimum transmission unit in the frequency domain is a subcarrier, and a bandwidth of the entire system transmission band is configured with total $N_{BW}$ number of subcarriers 504.

A basic unit of a resource in the time-frequency domain is a resource element (RE) 512, which may be represented by an OFDM symbol index and a subcarrier index. A resource block (RB or physical resource block (PRB)) 508 is defined to the $N_{symb}$ number of consecutive OFDM symbols 502 in the time domain and the $N_{RB}$ number of consecutive subcarriers 510 in the frequency domain. Accordingly, one RB 508 includes the $N_{symb} \times N_{RB}$ number of REs 512. In general, a minimum transmission unit of data is an RB. In the NR system, in general, $N_{symb}$=14, $N_{RB}$=12, and $N_{BW}$ and $N_{RB}$ are proportional to the bandwidth of the system transmission band. A data rate may increase in proportion to the number of RBs scheduled to the terminal. In the NR system, in case of a frequency division duplex (FDD) system that divides and operates a downlink and uplink by frequencies, a downlink transmission bandwidth and an uplink transmission bandwidth may be different from each other. The channel bandwidth represents a radio frequency (RF) bandwidth corresponding to the system transmission bandwidth. [Table 1] and [Table 2] represent a part of the corresponding relation between a system transmission bandwidth, subcarrier spacing (SCS), and a channel bandwidth defined in the NR system in frequency bands lower than 6 GHz and higher than 6 GHz. For example, a transmission bandwidth of an NR system having a 100 MHz channel bandwidth with 30 kHz subcarrier spacing is configured with 273 RBs. In [Table 1] and [Table 2], N/A may be a bandwidth-subcarrier combination not supported by the NR system.

[Table 1]

| Channel bandwidth [MHz] | SCS | 5 | 10 | 20 | 50 | 80 | 100 |
|---|---|---|---|---|---|---|---|
| Transmission bandwidth configuration $N_{RB}$ | 15kHz | 25 | 52 | 106 | 270 | N/A | N/A |
| | 30kHz | 11 | 24 | 51 | 133 | 217 | 273 |
| | 60kHz | N/A | 11 | 24 | 65 | 107 | 135 |

[Table 2]

| Channel bandwidth [MHz] | SCS | 50 | 100 | 200 | 400 |
|---|---|---|---|---|---|
| Transmission bandwidth configuration $N_{RB}$ | 60kHz | 66 | 132 | 264 | N/A |
| | 120kHz | 32 | 66 | 132 | 264 |

In the NR system, scheduling information on downlink data or uplink data is transmitted from the base station to the terminal through downlink control information (DCI). DCI is defined in various formats, and whether it is an uplink grant, which is scheduling information on uplink data or a downlink grant, which is scheduling information on downlink data according to each format, and whether it is compact DCI in which the size of control information is small, whether spatial multiplexing using multiple antennas is applied, whether it is DCI for power control, and the like may be determined. For example, DCI format 1-1, which is scheduling control information on downlink data, may include at least one of items illustrated in Table 3.

[Table 3]

| Item | Contents |
|---|---|
| Carrier indicator | Indicate in which frequency carrier it is transmitted. |
| DCI format indicator | Indicator for distinguishing whether the corresponding DCI is for downlink or uplink. |
| Bandwidth part (BWP) indicator | Indicate in which BWP it is transmitted. |
| Frequency domain resource allocation | Indicate an RB in a frequency domain allocated for data transmission. A resource to be expressed is determined according to a system bandwidth and resource allocation method. |
| Time domain resource allocation | Indicate in which OFDM symbol of which slot a data related channel is to be transmitted. |
| VRB-to-PRB mapping | Indicate a method of mapping a virtual RB (VRB) index and a physical RB (PRB) index. |
| Modulation and coding scheme (MCS) | Indicate a modulation method and a code rate used for data transmission. That is, it may indicate a code rate value that can notify a TBS and channel coding information together with information on whether it is QPSK, 16QAM, 64QAM, or 256QAM. |

(continued)

| Item | Contents |
|---|---|
| Codeblock group transmission information | When CBG retransmission is configured, it indicates information on which CBG is transmitted. |
| HARQ process number | Indicate the process number of HARQ |
| New data indicator (NDI) | Indicate whether the HARQ is initial transmission or retransmission. |
| Redundancy version (RV) | Indicate a redundancy version of HARQ. |
| Transmit power control command (TPC) for physical uplink control channel (PUCCH) | Indicate a transmission power control command for a PUCCH, which is the uplink control channel. |

In [Table 3], in case of PDSCH transmission, time domain resource assignment may be represented by information on a slot in which the PDSCH is transmitted, a start symbol position S in the slot, and the number L of symbols to which the PDSCH is mapped. Here, S may be a relative position from the start of the slot, L may be the number of consecutive symbols, and S and L may be determined from start and length indicator values (SLIV) defined as in [Table 4].

[Table 4]

if $(L-1) \leq 7$ then
$SLIV = 14(L-1) + S$
else
$SLIV = 14 \cdot (14-L+11) + (14-1-S)$
where $0 < L \leq 14-S$

In the NR system, information on the corresponding relation between the SLIV value and the PDSCH or physical uplink shared channel (PUSCH) mapping type and information on the slot in which the PDSCH or PUSCH is transmitted may be configured in one row through the RRC configuration. Thereafter, by indicating an index value defined in the configured corresponding relation using time domain resource allocation of DCI, the base station may transfer, to the terminal, information on the slot in which the SLIV value, the PDSCH or PUSCH mapping type, and the PDSCH or PUSCH are transmitted. In case of the NR system, the PDSCH or PUSCH mapping type is defined to a type A and a type B. In case of the PDSCH or PUSCH mapping type A, a demodulation reference signal (DMRS) symbol starts from the second or third OFDM symbol in the slot. In case of the PDSCH or PUSCH mapping type B, a DMRS symbol starts from the first OFDM symbol of a time domain resource allocated for PUSCH transmission.

[Table 5] and [Table 6] illustrate combinations of S and L supported for each type of the PDSCH and the PUSCH.

[Table 5]

| PDSCH mapping type | Normal cyclic prefix | | | Extended cyclic prefix | | |
|---|---|---|---|---|---|---|
| | S | L | S+L | S | L | S+L |
| Type A | {0,1,2,3} (Note 1) | {3,...,14} | {3,...,14} | {0,1,2,3} (Note 1) | {3,...,12} | {3,...,12} |
| Type B | {0,...,12} | {2,4,7} | {2,...,14} | {0,...,10} | {2,4,6} | {2,...,12} |
| Note 1: S = 3 is applicable only if *dmrs-TypeA-Posiition* = 3 | | | | | | |

[Table 6]

| PUSCH mapping type | Normal cyclic prefix | | | Extended cyclic prefix | | |
|---|---|---|---|---|---|---|
| | S | L | S+L | S | L | S+L |
| Type A | 0 | {4,...,14} | {4,...,14} | 0 | {4,...,12} | {4,...,12} |
| Type B | {0,...,13} | {1,...,14} | {1,...,14} | {0,...,12} | {1,...,12} | {1,...,12} |

DCI may be transmitted in a physical downlink control channel (PDCCH), which is a downlink control channel through channel coding and modulation. The PDCCH may be used for referring to control information itself rather than a channel. In general, DCI is independently scrambled with a specific radio network temporary identifier (RNTI) or terminal identifier for each terminal, is configured with an independent PDCCH after addition of a cyclic redundancy check (CRC) and channel coding, and is transmitted. The PDCCH is mapped to a control resource set (CORESET) configured to the terminal.

Downlink data may be transmitted in PDSCH, which is a physical channel for downlink data transmission. The PDSCH may be transmitted after a control channel transmission period, and scheduling information such as a specific mapping position and a modulation method in the frequency domain is indicated by DCI transmitted through the PDCCH. The base station notifies the terminal of a modulation scheme applied to the PDSCH to be transmitted and a size of data (e.g., transport block size (TBS)) to be transmitted through the MCS among control information constituting DCI. In an embodiment, the MCS may be configured with 5 bits or more or fewer bits. The TBS corresponds to a size before channel coding for error correction is applied to a transport block (TB), which is data in which the base station wants to transmit.

In the disclosure, a transport block (TB) may include a medium access control (MAC) header, a MAC control element (CE), one or more MAC service data unit (SDU), and padding bits. Alternatively, the TB may indicate a data unit or MAC protocol data unit (PDU) sent down from the MAC layer to the physical layer.

Modulation schemes supported by the NR system are quadrature phase shift keying (QPSK), 16 quadrature amplitude modulation (QAM), 64 QAM, and 256 QAM, and each modulation order (Qm) may be 2, 4, 6, or 8. That is, 2 bits per symbol for QPSK, 4 bits per symbol for 16 QAM, 6 bits per symbol for 64 QAM, and 8 bits per symbol for 256 QAM may be transmitted.

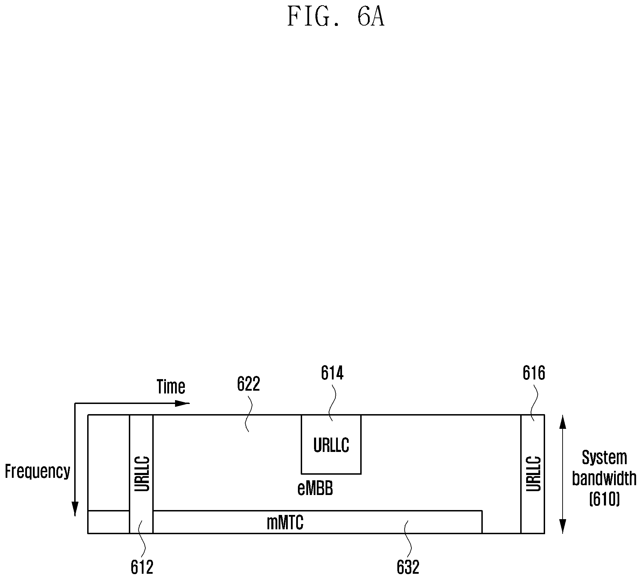

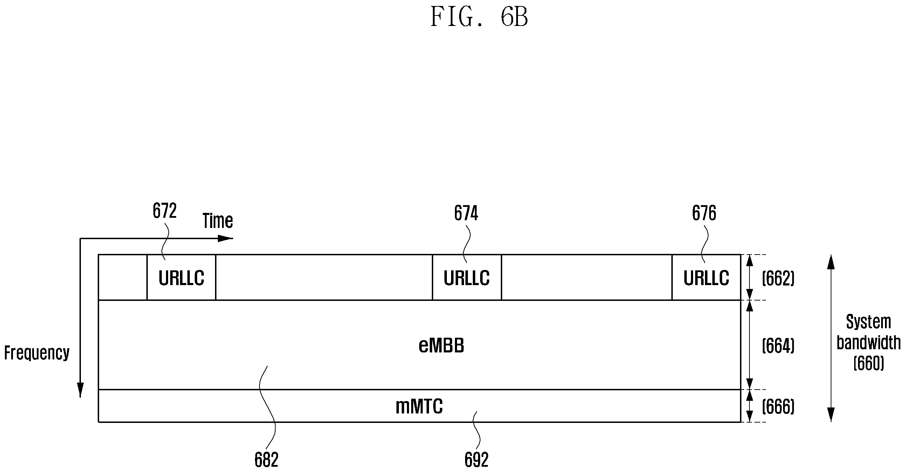

In terms of services, the NR system is designed to allow various services to be multiplexed freely in time and frequency resources, and accordingly, waveform/numerology, reference signals, and the like may be adjusted freely or dynamically, as needed. In order to provide an optimal service to a terminal in wireless communication, optimized data transmission through measurement of a channel quality and interference amount is important, and accordingly, accurate channel state measurement is essential. However, unlike 4G communication in which the channel and interference characteristics do not change significantly according to frequency resources, in case of 5G channels, channel and interference characteristics change greatly according to the service; thus, it is necessary to support a subset of the frequency resource group (FRG) dimension that can measure separately the channel and interference characteristics. The NR system may divide types of supported services into an enhanced mobile broadband (eMBB), massive machine type communications (mMTC), and ultrareliable and low-latency communications (URLLC). The eMBB is a service that aims at high-speed transmission of high-capacity data, the mMTC is a service that aims at minimizing terminal power and accessing multiple terminals, and URLLC is a service that aims at high reliability and low latency. Different requirements may be applied according to the type of service applied to the terminal. Examples of resource distribution of each service are illustrated in FIGS. 6A and 6B. Hereinafter, with reference to FIGS. 6A and 6B, there is identified a method in which frequency and time resources are allocated for information transmission in each system.

FIG. 6A is a diagram illustrating an example of allocation of data for each service to a frequency-time resource in a wireless communication system according to various embodiments of the disclosure.

In case of FIG. 6A, resources are allocated for an eMBB 622, URLLC 612, 614, and 616, and mMTC 632 in an entire system frequency band 610. In case that URLLC 612, 614, and 616 data is generated while eMBB 622 data and mMTC 632 data are allocated and transmitted in a specific frequency band, URLLC 612, 614, and 616 data may be transmitted without transmitting or emptying a part already allocated for the eMBB 622 and the mMTC 632. Because the URLLC requires a reduction in delay time, a resource for transmitting the URLLC 612, 614, and 616 data may be allocated to a part of the resource allocated to the eMBB 622. In case that the URLLC 612, 614, and 616 are additionally allocated and transmitted in the resource to which the eMBB 622 is allocated, the eMBB 622 data may not be transmitted in the overlapping frequency-time resource; thus, a transmission performance of the eMBB 622 data may be lowered. That is, in the above case, a transmission failure of the eMBB 622 data may occur due to allocation of resources for the URLLC 612, 614, and 616. The method illustrated in FIG. 6A may be referred to as a preemption method.

FIG. 6B is a diagram illustrating another example of allocating data for each service to a frequency-time resource in a wireless communication system according to various embodiments of the disclosure.

FIG. 6B illustrates an example in which each service is provided in each of subbands 662, 664, and 666 in which an entire system frequency band 660 is divided. Specifically, the subband 662 is used for data transmission of URLLC 672, 674, and 576, the subband 664 is used for data transmission of an eMBB 682, and the subband 666 is used for data transmission of mMTC 692. Information related to a configuration of the subbands 662, 664, and 666 may be predetermined, and the information may be transmitted from the base station to the terminal through higher signaling. Alternatively, information related to the subbands 662, 664, and 666 may be arbitrarily divided by a base station or a network node, and provide services without transmission of separate subband configuration information to the terminal.

According to various embodiments, a length of a transmission time interval (TTI) used for URLLC transmission may be shorter than that of a TTI used for eMBB or mMTC transmission. Further, a response of URLLC-related information may be transmitted faster than eMBB or mMTC, and accordingly, a terminal using the URLLC service can transmit and receive information with low delay. Structures of a physical layer channel used for each type so as to transmit the above three services or data may be different from each other. For example, at least one of a length of a TTI, an allocation unit of a frequency resource, a structure of a control channel, or a data mapping method may be different from each other.

Although the three services and three data types have been described above, more kinds of services and corresponding data types may exist. Even in this case, various embodiments to be described later may be implemented.

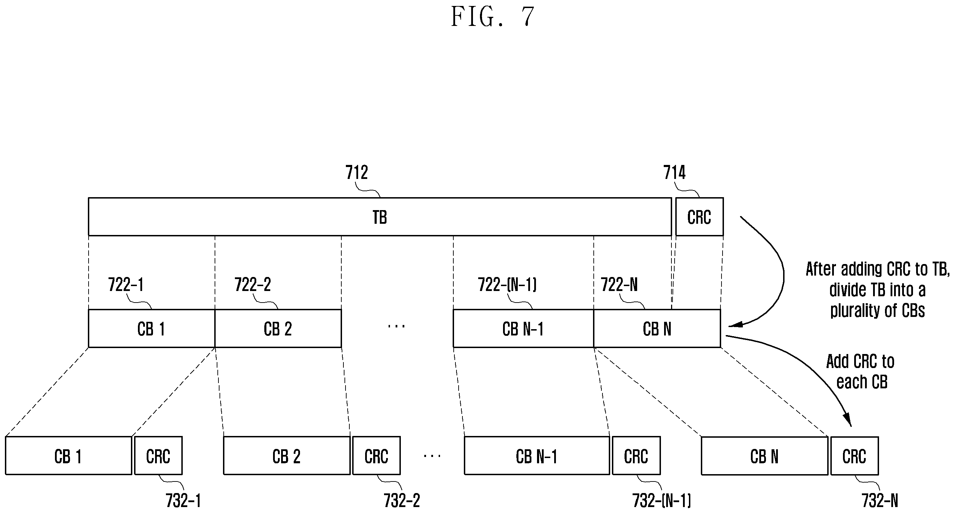

FIG. 7 is a diagram illustrating a data encoding method in a wireless communication system according to various embodiments of the disclosure.

FIG. 7 illustrates that one TB is segmented into several code blocks (CBs) and that a CRC is added.

With reference to FIG. 7, a CRC 714 may be added to the rear end or front end of one TB 712 to be transmitted in uplink or downlink. The CRC 714 may have a 16-bit or 24-bit, or a pre-fixed number of bits, or a variable number of bits according to channel conditions, and be used in the receiver so as to determine whether channel coding is successful. A block to which the TB 712 and the CRC 714 are added is segmented into a plurality of CBs 722-1, 722-2, 722-(N-1) and 722-N. The block may be segmented into a predefined size of CB, and in this case, the last CB 722-N is smaller in size than the other CBs, or may be configured to have the same length as that of other CBs by adding 0, a random value, or 1. CRCs 732-1, 732-2, 732-(N-1), and 732-N may be added to each of the segmented CBs. The CRCs 732-1, 732-2, 732-(N-1), and 732-N may have 16 bits, 24 bits, or a pre-fixed number of bits and be used for determining the success or failure of channel coding at the receiver.

The TB 712 and a cyclic generator polynomial may be used for generating the CRC 714. The cyclic generator polynomial may be defined in various ways. For example, it is assumed that a cyclic generator polynomial $g_{CRC24A}(D)$ = $D^{24}+D^{23}+D^{18}+D^{17}+D^{14}+D^{11}+D^{10}+D^7+D^6+D^5+D^4+D^3+D+1$ for 24-bit CRC, and if L= 24, for TB data $a_0,a_1,a_2,a_3,...,a_{A-1}$, the CRC $p_1,p_2,...,p_{L-1}$ may be determined to a value that divides $a_0D^{A+23}+a_1D^{A+22}+...a_{A-1}D^{24}+p_0D^{23}+p_1D^{22}+...p_{22}D^1+p_{23}$ by $g_{CRC24A}(D)$ and that the remainder becomes 0. In the above example, it is described that the CRC length L is 24, but the length L may be defined differently, such as 12, 16, 24, 32, 40, 48, 64, and the like.

As described above, after a CRC is added to the TB, the sum of the TB and the CRC is segmented into the N number of CBs 722-1, 722-2, 722-(N-1), and 722-N. The CRCs 732-1, 732-2, 732-(N-1), and 732-N are added to the CBs 722-1, 722-2, and 722-(N-1), and 722-N, respectively. The CRC added to each CB may be generated based on a CRC of a different length or a different cyclic generator polynomial from that when generating the CRC added to the TB. However, according to another embodiment, the CRC 714 added to the TB and the CRCs 732-1, 732-2, 732-(N-1), and 732-N added to the CBs 722-1, 722-2, 722-(N-1), and 722-N may be omitted according to the type of channel code to be applied to the CB. For example, when a low density parity code (LDPC), not a turbo code, is applied to the CB, CRCs 732-1, 732-2, 732-(N-1), and 732-N added to each CB may be omitted. However, even in case that the LDPC is applied, the CRCs 732-1, 732-2, 732-(N-1), and 732-N may be added to the CBs 732-1, 732-2, 732-(N-1), 732-N. Further, even in case that a polar code is used, the CRC may be added or omitted.

As illustrated in FIG. 7, a maximum length of one CB is determined according to the type of channel coding applied to the TB, and the TB and the CRC added to the TB are segmented into CBs according to the maximum length of the CB. In the conventional LTE system, a CRC for the CB is added to the segmented CB, data bits and the CRC of the CB are encoded into a channel code; thus, coded bits are determined, and for each coded bits, the number of rate-matched bits is determined as promised in advance.

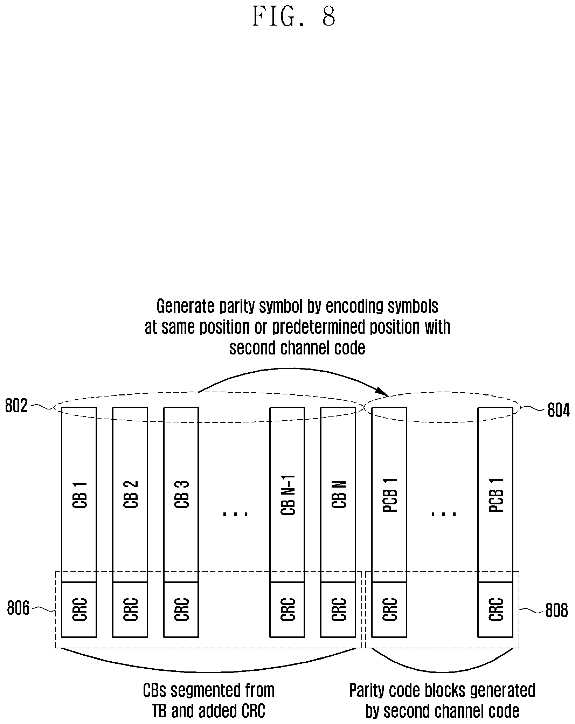

FIG. 8 is a diagram illustrating an example of using an outer code in a wireless communication system according to various embodiments of the disclosure.

With reference to FIG. 8, after one TB is segmented into a plurality of codeblocks (CBs), bits or symbols 802 at the same position in each CB are encoded using a second channel code. Accordingly, parity bits or symbols 804 are generated. Thereafter, CRCs 806 and 806 may be added to the CBs and parity CBs, respectively generated by second channel code encoding.

Whether to add the CRCs 806 and 808 may vary according to the type of the channel code. For example, in case that the turbo code is used as a first channel code, CRCs 806 and 808 may be added. In the disclosure, as the first channel code, a convolutional code, an LDPC code, a turbo code, a polar code, and the like may be used. However, this is only an example, and various channel codes may be applied to the disclosure as the first channel code. In the disclosure, as the second channel code, for example, a reed-solomon code, a BCH code, a raptor code, a parity bit generation code, and the like may be used. However, this is only an example, and various channel codes may be used as the second channel code.

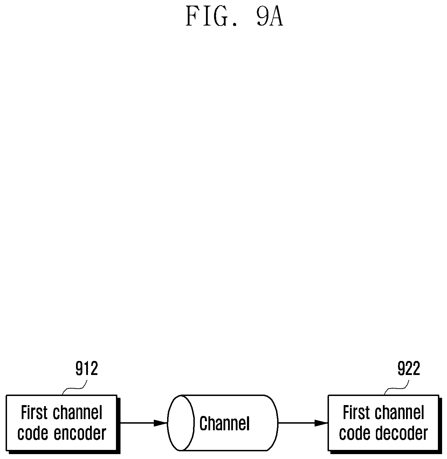

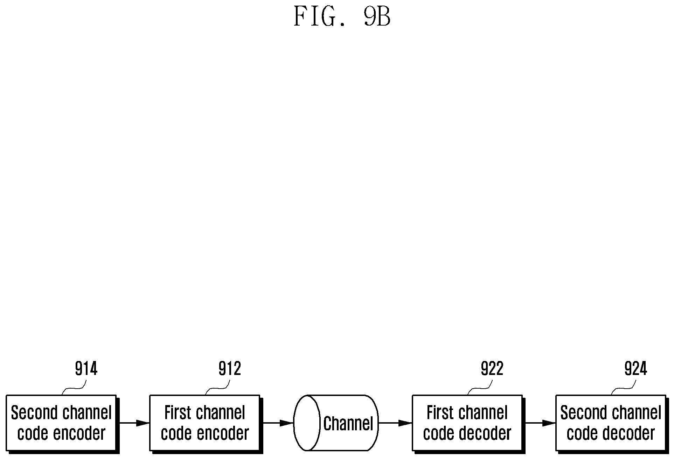

FIGS. 9A and 9B are block diagrams illustrating configurations of a transmitter and a receiver using an outer code in a wireless communication system according to various embodiments of the disclosure.

With reference to FIG. 9A, in case that an outer code is not used, a first channel code encoder 912 and a first channel code decoder 922 are included in the transmitter and the receiver, respectively, and a second channel code encoder 914 and a second channel code decoder 924 may not be included in the transmitter and the receiver. In case that an outer code is not used, the first channel code encoder 912 and the first channel code decoder 922 may be configured in the same way as a case that an outer code to be described later is used.

With reference to FIG. 9B, in case that the outer code is used, data to be transmitted may pass through the second channel code encoder 914. Bits or symbols that have passed through the second channel code encoder 914 may pass through the first channel code encoder 912. When the channel-coded symbols pass through the channel and are received by the receiver, the receiver may perform a decoding operation sequentially using the first channel code decoder 922 and the second channel code decoder 924 based on the received signal. The first channel code decoder 922 and the second channel code decoder 924 may perform operations corresponding to the first channel code encoder 912 and the second channel code encoder 914, respectively.

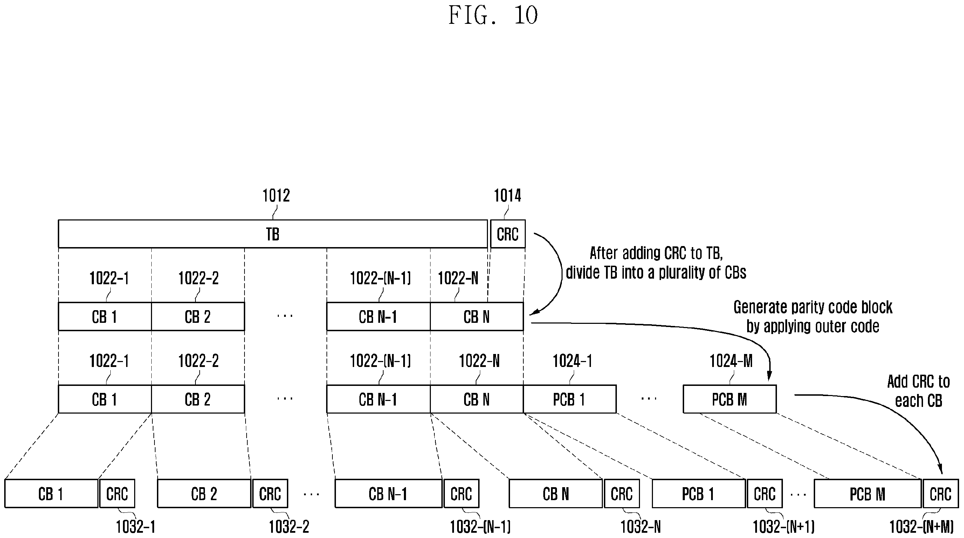

FIG. 10 is a diagram illustrating an example of a process in which one TB is encoded in a wireless communication system according to various embodiments of the disclosure.

FIG. 10 illustrates a process of generating one or more parity CBs by applying a second channel code or an outer code to a plurality of TBs segmented from one TB.

With reference to FIG. 10, after a CRC 1014 is added to one TB 1012, the one TB 1012 may be segmented into at least one CB or a plurality of CBs 1022-1 to 1022-N. In this case, in case that only one CB is generated according to the size of the TB 1012, the CRC may not be added to the corresponding CB. When an outer code is applied to the plurality of CBs 1022-1 to 1022-N, parity CBs (PCBs) 1024-1 to 1024-M may be generated. In case that the outer code is used, the parity CBs 1024-1 to 1024-M may be positioned after the last CB 1022-N. After encoding using the outer code, CRCs 1032-1 to 1032-(N+M) may be added. Thereafter, the CBs and the parity CBs may be encoded according to the channel code along with the CRC.

In a wireless communication system according to various embodiments, a size of a TB may be calculated through the following steps. For convenience, in the embodiment of the disclosure, each calculation step is specifically described for the PDSCH, but the case of the PUSCH may be similarly applied. For example, each parameter necessary for determining a TBS or $N_{RE}$ for the PUSCH may be configured based on the number of OFDM symbols allocated to the PUSCH, the DM-RS type, and overhead values configured per RB/PRB.

[TBS Determination Method 1]

Step 1: Calculate the number $N_{RE}$ of REs allocated to PDSCH mapping in one PRB in the allocated resource.

$N_{RE}$ may be calculated as $N'_{RE} = N^{RB}_{sc} \cdot N^{sh}_{symb} - N^{PRB}_{DMRS} - N^{PRB}_{oh}$. Here, $N^{RB}_{sc}$ denotes the number (e.g., 12) of subcarriers included in one RB, $N^{sh}_{symb}$ denotes the number of OFDM symbols allocated to the PDSCH, $N^{PRB}_{DMRS}$ denotes the number of REs in one PRB occupied by a demodulation reference signal (DMRS) of the same code division multiplexing (CDM) group, and $N^{PRB}_{oh}$ denotes the number (e.g., configured to one of 0, 6, 12, and 18) of REs occupied by an overhead in one PRB configured by higher signaling. Thereafter, the total number $N_{RE}$ of REs allocated to the PDSCH may be calculated. $N_{RE}$ is calculated as $N_{RE} = \min(156, N'_{RE}) \cdot n_{PRB}$. $n_{PRB}$ denotes the number of PRBs allocated to the terminal.

Step 2: The number $N_{info}$ of temporary information bits may be calculated as $N_{info} = N_{RE} \cdot R \cdot Q_m \cdot v$. Here, R denotes a code rate, Qm denotes a modulation order, and v denotes the number of allocated layers. The code rate and the modulation order may be transferred using an MCS field included in the control information and a predefined corresponding relation. If $N_{info} \leq 3824$, the TBS may be calculated according to step 3, otherwise (i.e., $N_{info} > 3824$), the TBS may be calculated according to step 4.

Step 3: $N'_{info}$ may be calculated as in $N'_{info} = \max\left(24, 2^n \cdot \lfloor \frac{N_{info}}{2^n} \rfloor\right)$; and n=max(3, $\lfloor \log_2(N_{info}) \rfloor$ -6). Thereafter, the TBS may be determined to a value closest to $N'_{info}$ among values not smaller than $N'_{info}$ in [Table 7].

[Table 7]

| Index | TBS | Index | TBS | Index | TBS | Index | TBS |
|---|---|---|---|---|---|---|---|
| 1 | 24 | 31 | 336 | 61 | 1288 | 91 | 3624 |

(continued)

| Index | TBS | Index | TBS | Index | TBS | Index | TBS |
|---|---|---|---|---|---|---|---|
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

Step 4: $N'_{info}$ may be calculated according to $N'_{info} = \max\left(3824, 2^n \times round\left(\frac{N_{info}-24}{2^n}\right)\right)$ and

$n = \lfloor \log_2(N_{info}-24)\rfloor -5$. Thereafter, the TBS may be determined through a $N'_{info}$ value and a pseudocode as illustrated in [Table 8].

【Table 8】

if $R \leq 1/4$

$$TBS = 8 * C * \left\lceil \frac{N'_{info} + 24}{8 * C} \right\rceil - 24, \text{ where } C = \left\lceil \frac{N'_{info} + 24}{3816} \right\rceil$$

else

if $N'_{info} > 8424$

$$TBS = 8 * C * \left\lceil \frac{N'_{info} + 24}{8 * C} \right\rceil - 24, \text{ where } C = \left\lceil \frac{N'_{info} + 24}{8424} \right\rceil$$

else

$$TBS = 8 * \left\lceil \frac{N'_{info} + 24}{8} \right\rceil - 24$$

end if

end if

According to the [TBS determination method 1], an accurate TBS may be determined using a specific calculation and the TBS table of Table 7 according to a range of $N_{info}$. That is, in order to perform the [TBS determination method 1], the TBS table of Table 7 should be stored in the terminal or the base station. For reference, in case that the reference value R = 1/4 or $N'_{info} = 8424$ in which operations are distinguished in step 4 of [TBS determination method 1] is a value that cannot be configured, it may be changed to a reference value that may be actually configured in the system. For example, in a 5G NR system conforming to 3GPP TS 38.212 document, because a largest code rate satisfying $R \leq 1/4$, is 251/1024, the above condition may be modified as in $R \leq 251/1024$ . Similarly, because a value of $N'_{info}$ is quantized and cannot have a value of $8192 < N'_{info} < 8448$ , the condition $N'_{info} > 8424$ may be changed as in $N'_{info} > 8192$ or $N'_{info} \geq 8448$ . Alternatively, it may be expressed as in $N_{info} \geq 8344$ based on $N_{info}$. Further,

in step 4, $\left\lceil \frac{N'_{info} + 24}{8 \cdot C} \right\rceil$ , $\left\lceil \frac{N'_{info} + 24}{3816} \right\rceil$ , $\left\lceil \frac{N'_{info} + 24}{8424} \right\rceil$ , and the like may be expressed more simply using the result of calculating in common $\frac{N_{info}}{8}$ , $\frac{N'_{info}}{8}$ , or $\frac{N'_{info} + 24}{8}$ . For example, if $N''_{info} = \frac{N'_{info} + 24}{8}$, it may be calculated more simply as in $C = \left\lceil \frac{N'_{info} + 24}{3816} \right\rceil = \left\lceil \frac{N''_{info}}{477} \right\rceil$ ,

$C = \left\lceil \frac{N'_{info} + 24}{8424} \right\rceil = \left\lceil \frac{N''_{info}}{1053} \right\rceil$ , or $\left\lceil \frac{N'_{info} + 24}{8 \cdot C} \right\rceil = \left\lceil \frac{N''_{info}}{C} \right\rceil$ , and the like. Because in $\frac{N'_{info}}{8}$

$$N'_{info}+24$$

, is always a multiple of 8 and 1/8 is $2^{-3}$, it may be easily implemented as a bit-shift operation for integers.

An embodiment of the disclosure reduces a size of the TBS table required to determine the TBS, and instead proposes an efficient method for determining the TBS through a simple calculation. In a communication system according to various embodiments, the TBS may be calculated through the following steps.

[TBS Determination Method 2]

Step 1: the same as step 1 of [TBS Determination Method 1]

Step 2: Determine the intermediate number $X=N_{RE} \cdot Q_m \cdot v \cdot A_R \cdot 2^{-13}$ (or $N_{info} \cdot 2^{-3}$ or $N_{RE} \cdot Q_m \cdot v \cdot R \cdot 2^{-3}$). Here, $A_R$ is a value defined as R*1024 in the MCS index table illustrated in Table 9, and means a numerator value when a target code rate is expressed as $A_R/1024$, and may be known when the MCS-related signaling field $I_{MCS}$ is received. If $X \leq 478$, the TBS is determined using step 3, otherwise the TBS is determined using step 4.

[Table 9]

| MCS Index $I_{MCS}$ | Modulation Order $Q_m$ | Target code Rate $R$ x [1024] | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 48164 |
| 26 | 6 | 873 | 5.1152 |
| 27 | 6 | 910 | 5.3320 |

(continued)

| MCS Index $I_{MCS}$ | Modulation Order $Q_m$ | Target code Rate $R$ x [1024] | Spectral efficiency |
|---|---|---|---|
| 28 | 6 | 948 | 5.5547 |
| 29 | 2 | reserved | |
| 30 | 4 | reserved | |
| 31 | 6 | reserved | |

Table 9 - Example of MCS index table

Step 3: If X≤478, the TBS is determined as follows.

- If X≤96, the parameter Y is determined as follows.

$$Y = \max\left(3, \left\lceil \frac{X}{24} \right\rceil \cdot \left\lceil \frac{X}{\left\lceil \frac{X}{24} \right\rceil} \right\rceil\right).$$

Otherwise (i.e., 96<X≤478), Y is determined to the nearest number not less than (i.e., greater than or equal to)

$$2^n \times \left\lfloor \frac{X}{2^n} \right\rfloor$$

using Table 10. Here, $n = \lfloor \log_2(X) \rfloor - 6$.

[Table 10]

| | | | | |
|---|---|---|---|---|
| 101 | 149 | 201 | 277 | 357 |
| 106 | 153 | 209 | 285 | 372 |
| 111 | 157 | 217 | 301 | 388 |
| 116 | 161 | 225 | 309 | 405 |
| 123 | 165 | 233 | 317 | 421 |
| 129 | 169 | 241 | 325 | 437 |
| 133 | 177 | 253 | 333 | 453 |
| 141 | 185 | 261 | 341 | 469 |
| 145 | 193 | 269 | 349 | 478 |

- $TBS = 2^3 \times Y$

  Step 4: If $X>478$, the TBS is determined as follows.

- First, the parameter $Y$ is determined as follows:

$$Y = \max\left(483, 2^n \times \text{Round}\left(\frac{X-3}{2^n}\right) + 3\right)$$

where $n = \lfloor \log_2(X-3) \rfloor - 5$, and $Round(\cdot)$ denotes a rounding function.

- if $A_R \leq 251$, $C = \left\lceil \frac{Y}{477} \right\rceil$ Otherwise, if $Y>1053$, $C = \left\lceil \frac{Y}{1053} \right\rceil$, if $Y\leq1053$, $C=1$

$$TBS = 2^3 \times \left(C \times \left\lceil \frac{Y}{C} \right\rceil - 3\right)$$

-

With reference to the above [TBS Determination Method 2], the temporary intermediate number $X$ was first determined based on the total number $N_{RE}$ of REs allocated to the PDSCH, the modulation order $Q_m$, the number $v$ of allocated layers, and the value $A_R$ related to the code rate. For reference, in the 5G NR system, the code rate is expressed as in $A_R \cdot 2^{-10}$ by the MCS table and it can be seen that $N_{info}$ of [TBS Determination Method 1] or $X=N_{RE} \cdot Q_m \cdot v \cdot A_R \cdot 2^{-13}$ of [TBS Determination Method 2] are generally simple positive rational numbers whose denominator is in the form of $2^{(integer)}$.

Based on the X value, the X value is first compared with a first reference value (e.g., 478), and in case that the X value is less than or equal to the first reference value, the X value is again compared with a second reference value (e.g., 96) as in step 3, and in case that the X value is less than or equal to (or less than) the second reference value, a predetermined calculation rule is applied to the X value to determine the TBS value through calculation, and in case that the X value is greater than (or equal to or greater than) the second reference value, the TBS value may be determined by applying the table of Table 10 and a predetermined rule. Here, because Table 10 has about half the size of the TBS table of Table 7, it is not necessary for the terminal or the base station to store all values corresponding to the TBS.

In case that the value of X is greater than the first reference value (e.g., 478), the TBS may be determined using another calculation formula as in step 4. In step 4, a condition $A_R \leq 251$ for determining a value of C corresponding to the number of code blocks may be modified as in the condition $R \leq 1/4$ or $R \leq 251/1024$ related to the code rate as in [TBS Determination Method 1], and the condition $Y>1053$ may be changed to $Y>1024$ or $Y \geq 1056$, or the condition may be expressed based on X as in $X \geq 1043$. However, because the method proposed in the disclosure does not actually need to calculate a code rate, a criterion may be configured by selecting an appropriate value $A_R$ from the MCS table. In fact, 251/1024 is a number smaller than 1/4 because it is about 0.245, but in the MCS table defined in 5G NR, it was configured to 251, which is a largest value among $A_R$ values corresponding to a code rate less than or equal to 1/4. In case that a $A_R$ value corresponding to a reference code rate value is different according to the system, the reference $A_R$ value may be changed.

In the [TBS determination method 2], the TBS may be determined based on $N_{info} =N_{RE} \cdot Q_m \cdot R \cdot v$ instead of X. However, in this case, it should be noted that a reference value for selecting a process for determining the TBS or a plurality of predetermined integer values should be used somewhat differently. For example, in case that the TBS is determined based on $N_{info}=N_{RE} \cdot Q_m \cdot R \cdot v$, it is almost the same as [TBS determination method 1], but step 3 may be modified as follows.

[Example of modification to step 3 in TBS determination method 2]

Step 3: in case that $N_{info} \leq 3824$, the TBS is determined as follows.

- If $N_{info} \leq 768$, the TBS is determined as follows:

$$TBS = \max\left(24, \left\lceil \frac{N_{info}}{192} \right\rceil \cdot \left\lceil \frac{N_{info}}{\left\lceil \frac{N_{info}}{192} \right\rceil} \right\rceil \right).$$

Otherwise (i.e., $768<N_{info} \leq 3824$), the nearest number that is not less than (i.e., greater than or equal to)

$$2^n \times \left\lfloor \frac{N_{info}}{2^n} \right\rfloor$$

is determined to the TBS using Table 11. Here, $n= \lfloor \log_2(N_{info}) \rfloor -6$.

[Table 11]

| | | | | |
|---|---|---|---|---|
| 808 | 1192 | 1608 | 2216 | 2856 |
| 848 | 1224 | 1672 | 2280 | 2976 |
| 888 | 1256 | 1736 | 2408 | 3104 |
| 928 | 1288 | 1800 | 2472 | 3240 |
| 984 | 1320 | 1864 | 2536 | 3368 |
| 1032 | 1352 | 1928 | 2600 | 3496 |
| 1064 | 1416 | 2024 | 2664 | 3624 |
| 1128 | 1480 | 2088 | 2728 | 3752 |

(continued)

| 1160 | 1544 | 2152 | 2792 | 3824 |
|------|------|------|------|------|

In general, because processing positive integers is more convenient than processing positive rational numbers in hardware, in the embodiment of the TBS determination method, in case of converting $N_{info}$ or $X$ to an integer and applying the calculation using a floor function, a ceiling function, or a round function, the calculation complexity may be further lowered.

For example, in [TBS Determination Method 1] and [TBS Determination Method 2], after selecting a method calculating $N_{info}$ or $X$ and then comparing it with a first reference value (e.g., 3824 in case of using $N_{info}$, 478 in case of using X) to determine the TBS, in actual operation, values determined in an integer form, such as $\lfloor N_{info} \rfloor$ or $\lfloor X \rfloor$, may be substituted into each expression for calculation.

As a specific example, when calculating main parameters in [TBS Determination Method 1] and [TBS Determination Method 2], it may be calculated in the following modified manner. That is, after determining an integer value $\lfloor X \rfloor$ from X, it may be calculated as in $\lfloor \log_2(\lfloor X \rfloor) \rfloor$, $\lfloor \log_2(\lfloor X \rfloor - 3) \rfloor$ (or $\lfloor \log_2(\lfloor N_{info} \rfloor - 24) \rfloor$),

$$2^n \times \left\lfloor \frac{\lfloor X \rfloor}{2^n} \right\rfloor,$$

$$Round\left( \frac{\lfloor X \rfloor - 3}{2^n} \right) \text{ (or } Round\left( \frac{\lfloor N_{info} \rfloor - 24}{2^n} \right) \text{),} \quad Y = \left\lceil \frac{\lfloor X \rfloor}{24} \right\rceil \cdot \left\lceil \frac{\lfloor X \rfloor}{\left\lceil \frac{\lfloor X \rfloor}{24} \right\rceil} \right\rceil, \quad Y = \left\lceil \frac{\lfloor X \rfloor - 1}{24} \right\rceil \cdot \left\lfloor \frac{\lfloor X \rfloor - 1}{\left\lceil \frac{\lfloor X \rfloor - 1}{24} \right\rceil} \right\rfloor + 1.$$

A brief summary of the above process is as follows.

Based on the $N_{RE} \cdot Q_m \cdot v \cdot R$ or $N_{RE} \cdot Q_m \cdot v \cdot R \cdot 2^{-3}$ value, it is first compared with a first reference value (e.g., 3824 or 478), and then a method for determining the TBS is first determined. Thereafter, the TBS value is determined using a method of converting the $N_{RE} \cdot Q_m \cdot v \cdot R$ or $N_{RE} \cdot Q_m \cdot v \cdot R \cdot 2^{-3}$ value to an integer by applying a floor function, a ceiling function, or a round function to the $N_{RE} \cdot Q_m \cdot v \cdot R$ or $N_{RE} \cdot Q_m \cdot v \cdot R \cdot 2^{-3}$ value and then determining the determined or selected TBS based on the value converted to an integer. Here, as a specific method for determining the TBS, various methods as well as the specific calculation method included in the [TBS determination method 1] and [TBS determination method 2] may be applied. The method may be simply expressed as in the following [TBS determination method 3].

[TBS Determination Method 3]

Step 1: the same as step 1 of [TBS Determination Method 1]

Step 2: Determine the temporary intermediate number $N_{info\_temp} = N_{RE} \cdot Q_m \cdot v \cdot R$ (or $X_{temp} = N_{RE} \cdot Q_m \cdot v \cdot A_R \cdot 2^{-13} = N_{RE} \cdot Q_m \cdot v \cdot R \cdot 2^{-3}$).

If $N_{info\_temp} \leq 3824$ (or $X_{temp} \leq 478$), a TBS value is determined based on step 3, and if $N_{info\_temp} > 3824$ (or $X_{temp} > 478$), a TBS value is determined based on step 4. However, steps 3 and 4 are calculated based on the integer intermediate number $N_{info} = \lfloor N_{info\_temp} \rfloor$ (or $X = \lfloor X_{temp} \rfloor$).

Steps 3 and 4: the same as each step of [TBS determination method 1] or [TBS determination method 2]

The disclosure proposed a method of simplifying and minimizing the operation in a calculation process and using $\lfloor N_{RE} \cdot Q_m \cdot R \cdot v \rfloor$ or $\lfloor N_{RE} \cdot Q_m \cdot v \cdot A_R \cdot 2^{-13} \rfloor$ in the calculation process in order to determine the TBS by using a small table as illustrated in Table 10 instead of the TBS table illustrated in Table 7. The values of $N_{RE}$, $Q_m$, $v$ are all positive integers, and there is an advantage that the operation of $2^{\pm(integer)}$ may be easily implemented as a general bit-shift operation. For reference, in 5G NR, an $A_R$ value is all positive integers except for cases of 682.5 and 916.5, and even in case that the $A_R$ value is 682.5 or 916.5, it may be easily implemented with an appropriate integer operation and a bit-shift operation. It may be calculated as $X = \lfloor N_{RE} \cdot Q_m \cdot v \cdot A_R \cdot 2^{-13} \rfloor$ or $X = \lfloor N_{RE} \cdot Q_m \cdot v \cdot R \cdot 2^{-3} \rfloor$. Similarly, even in case of calculating a $N_{info}$ value, it may be calculated using a code rate R and using the $R = A_R \cdot 2^{-10}$ relationship or it may be calculated based on $A_R$.

In step 3 or less of the above [TBS determination method 1] and [TBS determination method 3] (i.e., after a specific method for TBS determination is determined), it may be proven using the following two lemma that a method of determining the TBS using a value of $X = \lfloor X_{temp} \rfloor$ or $N_{info} = \lfloor N_{info\_temp} \rfloor$ of an integer form instead of an intermediate number, which is generally a rational number suggests the same result, but a detailed description thereof will be omitted.

Lemma 1: For any positive integers x, m, n and a positive real number y, the following is established:

$$\left\lfloor \frac{\left\lfloor \frac{y}{x^m} \right\rfloor}{x^n} \right\rfloor = \left\lfloor \frac{y}{x^{m+n}} \right\rfloor.$$

Lemma 2: For a positive integer $n(\geq 3)$ greater than or equal to 3 and a positive real number $y(\geq 2^{n+3})$ greater than or equal to $2^{n+3}$, the following is established:

$$\text{Round}\left( \frac{\left\lfloor \frac{|y|}{8} \right\rfloor - 3}{2^n} \right) = \text{round}\left( \frac{y - 24}{2^{n+3}} \right).$$

In the 5G NR system, for a PDSCH allocated by a PDCCH having a CRC scrambled DCI format 1_0 by P-RNTI or RA-RNTI, in a process of calculating $N_{info}$, a scaling factor S is applied as follows ($N_{info}=S \cdot N_{RE} \cdot R \cdot Q_m \cdot v$). Here, S has values such as 1, 0.5, and 0.25, and $N_{info}$ is still a positive rational value.

In the disclosure, in case that the operation is performed using the intermediate number X instead of $N_{info}$, the scaling factor may be applied as in $X=N_{RE} \cdot Q_m \cdot v \cdot A_R \cdot 2^{-(13+s)}$, and in this case, the scaling factor S may be defined as an integer value as illustrated in Table 12. Here, the scaling factor S may be determined by a TB scaling field value in DCI, as illustrated in Table 12. The operation of multiplying the scaling factor may be easily implemented by more performing the bit shift by S times in the process of determining X.

[Table 12]

| TB scaling field | Scaling factor S |
|---|---|
| 00 | 0 |
| 01 | 1 |
| 10 | 2 |
| 11 | |

The NDI or HARQ process ID signaled on the PDCCH and the TBS determined as above are reported to the upper layer.

In case that [TBS determination method 3] is applied, the TBS may be determined by configuring as in $N_{info\_temp}=S \cdot N_{RE} \cdot R \cdot Q_m \cdot v$ or $X_{temp}=N_{RE} \cdot Q_m \cdot v \cdot A_R \cdot 2^{-(13+s)}$ as a temporary intermediate value.

So far, in the [TBS determination method 1] to [TBS determination method 3], in step 3 or less (i.e., after a specific method for TBS determination is determined), a method of determining the TBS using a rational intermediate number $N_{info}$ or X, or $N_{info} = \lfloor N_{info\_temp} \rfloor$ or $X= \lfloor X_{temp} \rfloor$, which is an integer intermediate number has been described.

In the above [TBS determination method 1] to [TBS determination method 3], in case of determining the TBS by determining the intermediate number as an integer using a floor, shilling, or round function from the beginning, all processes for determining the TBS are configured with operations based on integers; thus, it becomes very simple. (e.g.,

$N_{\text{info}} \triangleq \lfloor N_{RE} \cdot Q_m \cdot v \cdot R \rfloor$ , $N_{\text{info}} \triangleq \lfloor N_{RE} \cdot Q_m \cdot v \cdot R \rfloor$ , $\lfloor N_{RE} \cdot Q_m \cdot v \cdot R \cdot 2^{-3} \rfloor$, or $\lfloor N_{info} \cdot 2^{-3} \rfloor$)

However, this method needs attention because there is a possibility that backward compatibility with the 5G NR system defined in the current 3GPP Release-15 may not be maintained. For example, in case that the $N_{info}$ value is between 3824 and 3825 ($3824 <N_{info} < 3825$) or the value of X is between 478 and 479 ($478 < X < 479$), when $\lfloor N_{info} \rfloor$ or $\lfloor X \rfloor$ is used as an intermediate number, the values become 3824 or 478, respectively; thus, it is necessary to use a TBS determination method based on calculation and a table corresponding to TBS candidate values defined to a plurality of integers. However, in the current 5G NR standard, because it is necessary to use a TBS determination method based on calculation without a table in case of $N_{info}>3824$ or $X>478$, it can be easily seen that different TBS values are determined.

In the disclosure, when determining a TBS based on an integer form such as $N_{info} = \lfloor N_{RE} \cdot Q_m \cdot v \cdot R \rfloor$, $N_{info}= \lceil N_{RE} \cdot Q_m \cdot v \cdot R \rceil$, $X= \lfloor N_{RE} \cdot Q_m \cdot v \cdot A_R \cdot 2^{-13} \rfloor$, or $X= \lceil N_{RE} \cdot Q_m \cdot v \cdot A_R \cdot 2^{-13} \rceil$ as an intermediate number without introducing a temporary intermediate number, a method in which the computational complexity is minimized while fully or maximally maintaining compatibility with the existing 5G NR standard release-15 or release-16 will be described.

First, in the TS 38.214 document release-15 document of the 5G NR standard, three MCS index tables are defined for the PDSCH and two MCS index tables are defined for the PUSCH. In the MCS index table, spectral efficiency values corresponding to the modulation order and the code rate and the product of the modulation order and the code rate are indicated for each index. Therefore, in case that a value corresponding to the product of the modulation order and the code rate is required in the system, a spectral efficiency value may be used. However, because the spectral efficiency value included in the MCS index table is an approximate value, it may be slightly different from the actual value; thus, in some cases, in case that an accurate spectral efficiency value is required (e.g., a process of determining a TBS), it may be preferable to obtain the value by directly multiplying the modulation order and the code rate value rather than using the spectral efficiency value of the MCS table as it is.

For example, if there is a case such as ($N'_{RE}$=90, $n_{PRB}$=179, $Q_m$=2, $R$=120/1024 , $v$=1) or ( $N_{RE}$=30, $n_{PRB}$=179, $Q_m$=2, $R$=120/1024, $v$=3) for an MCS index 0 of Table 9, $N_{RE} \cdot Q_m \cdot v \cdot R \cong 3775.78 < 3776$, but instead of a $Q_m \cdot R$ value, in case that the spectral efficiency value 0.2344 defined in the MCS table of Table 9 is used, because $N_{RE} \cdot v \cdot$ *(Spectral efficiency)* $\cong 3776.18 > 3776$ is established, in the former case, the TBS value is determined to 3752, and in the latter case, the TBS value is determined to 3824; thus, different TBS values are determined, so that caution is required.

In a process of determining the TBS value, in order to calculate $N_{info}$ or X, the $Q_m \cdot R_{value}$ may be easily determined according to the MCS index table. Currently, 5G NR uses 3824 as a reference value for determining a step (or method) for determining the TBS, and in case that it is assumed that the $N_{RE} \cdot v \cdot Q_m \cdot R$ value is accurately 3824, it may be arranged as in $N_{RE} \cdot v = 3824/(Q_mR)$, and in this case, because $N_{RE}$ or $v$ is an integer, $3824/(Q_mR)$ should be also an integer. However, 3824 is a number that may be expressed as a product of 16 and 239, and 239 is a prime number. However, in the MCS index table, a value of $Q_m$ or $A_R$ corresponding to $R$ cannot be a multiple of 239, and in order to establish $N_{RE} \cdot v = 3824/(Q_mR)$ because of a relationship of $N_{RE} = n_{PRB} \cdot \min(156, N'_{RE})$, $n_{PRB}$=239 should be satisfied. When this is rearranged, it may be expressed as Equation 1.

[Equation 1]

$$N_{RE} \cdot v \cdot Q_m \cdot R = (n_{PRB} \cdot \min(156, N'_{RE})) \cdot v \cdot Q_m \cdot A_R \cdot 2^{-10} = 239 \cdot \min(156, N'_{RE}) \cdot v \cdot Q_m \cdot A_R \cdot 2^{-10}$$
$$= 16 \times 239,$$
$$\Rightarrow \min(156, N'_{RE}) \cdot v \cdot Q_m \cdot A_R = 2^{14}.$$

In the MCS index table defined in the current 5G NR Release-15, it may be identified that Equation 1 does not establish regardless of the $N'_{RE}$ value except for the case of ( $Q_m$=2 , $A_R$=64 ) or ( $Q_m$=1 , $A_R$=128). (In the disclosure, a detailed description thereof will be omitted.) Therefore, Equation 1 may be simply expressed as Equation 2.

[Equation 2]

$$\min(156, N'_{RE}) \cdot v = 2^7, \quad v = 2^a \ (a = 0, 1, 2, 3) \quad \Rightarrow \quad N'_{RE} = 2^{7-a}.$$

Equations 1 and 2 cannot be established unless $v$ is an exponential form of 2, and in 5G NR Release-15 or a standard or system compatible therewith, because the maximum value of $v$ is less than 16, $v=2^a$(a = 0, 1, 2, 3) was defined. As a result, in order for the $N_{RE} \cdot v \cdot Q_m \cdot R$ value to be accurately 3824 in 5G NR release-15, the $N'_{RE}$ value should have one of 16, 32, 64, and 128.

The $N'_{RE}$ value defined in [TBS determination method 1] is illustrated in Equation 3.

[Equation 3]

$$N'_{RE} = N_{sc}^{RB} \cdot N_{symb}^{sh} - N_{DMRS}^{PRB} - N_{oh}^{PRB}.$$

where $N_{sc}^{RB}$ is the number (e.g., 12) of subcarriers included in one RB, $N_{oh}^{PRB}$ is the number (e.g., configure to one of 0, 6, 12, and 18) of REs occupied by an overhead in one PRB configured by higher signaling (e.g., xOverhead in PDSCH-ServingCellConfig or xOverhead in PUSCH-ServingCellConfig); thus, it can be seen that the $N_{sc}^{RB} \cdot N_{symb}^{sh} - N_{oh}^{PRB}$ value is always a multiple of 6. Therefore, in specific circumstances, the $N'_{RE}$ value may not be 16, 32, 64, or 128 according to the $N_{DMRS}^{PRB}$ value.

For example, in the 5G NR system conforming to TS 38.212 document of 3GPP Release-15, in case that the DM-RS type was configured as in dmrs-Type = 1 through DCI, the number of DMRS CDM groups without data is 1 or 2, and in this case, because each group is configured to 6 REs, the $N_{DMRS}^{PRB}$ value should also be at least a multiple of 6; thus a value of $N'_{RE} = N_{sc}^{RB} \cdot N_{symb}^{sh} - N_{DMRS}^{PRB} - N_{oh}^{PRB}$ is consequently a multiple of 6 (regardless of the number $N_{symb}^{sh}$ symbols allocated to a PDSCH or PUSCH). In other words, $N'_{RE}$ cannot be an exponential number of 2 such as 16, 32, 64, or 128.

This means that the $N'_{RE} \cdot v \cdot Q_m \cdot R$ value cannot be accurately 3824 in a system in which the $N'_{RE}$ value is not configured to a value such as 16, 32, 64, and 128. That is, because only rational numbers less than or greater than 3824 are possible as the $N_{RE} \cdot v \cdot Q_m \cdot R$ value, the criteria for determining step 3 or step 4 in [TBS determination method 1] to [TBS determination method 3] may be converted and used as follows.

[Another embodiment of modification of step 2 in the TBS determination method]

Step 2: Determine the intermediate number $N_{info} = \lfloor N_{RE} \cdot Q_m \cdot v \cdot R \rfloor$ (or $X = \lfloor N_{RE} \cdot Q_m \cdot v \cdot R \rfloor = \lfloor N_{RE} \cdot Q_m \cdot v \cdot A_R \cdot 2^{-13} \rfloor$).

If $N_{info} < 3824$ (or $X < 478$), a TBS value is determined based on step 3, and if $N_{info} \geq 3824$ (or $X \geq 478$), a TBS value is determined based on step 4. Further, when applying a scaling factor S in the process of calculating $N_{info}$ (or X), it may be applied as $N_{info} = \lfloor S \cdot N_{RE} \cdot Q_m \cdot v \cdot R \rfloor$ or $X = \lfloor N_{RE} \cdot Q_m \cdot v \cdot A_R \cdot 2^{-(13+S)} \rfloor$ or $X = \lfloor N_{RE} \cdot Q_m \cdot v \cdot R \cdot 2^{-(3+S)} \rfloor$), and the scaling factor may have values such as 0, 0.5, and 0.25, or may be defined as an integer value as in Table 12.

In the current 3GPP Release-15 or compatible 5G NR system, if there is no case in which $N_{RE} \cdot v = 3824/(Q_m R)$ is not accurately established (e.g., in case that it is not established regardless of the DM-RS type; in case that the above case does not establish regardless of a configuration such as dmrs-Type = 1, dmrs-Type = 2), in [TBS determination method 1] to [TBS determination method 3] or a method similar thereto, the TBS may be determined simply by integerizing the necessary parameters in each calculation process by applying the above [another embodiment of modification of step 2 in the TBS determination method]. Further, in the current 3GPP Release-15 or 5G NR system compatible therewith, if there is a case that $N_{RE} \cdot v = 3824/(Q_m R)$ is accurately established or is not established according to the system configuration (e.g., in case that whether the establishment of $N_{RE} \cdot v = 3824/(Q_m R)$ is changed according to the DM-RS type; in case of dmrs-Type = 1, the above condition is not established and in case of dmrs-Type = 2, the above condition is established), [TBS determination method 1] to [TBS determination method 3] or a method similar thereto is applied to determine the TBS under the conditions in which the above relationship may be established, and under the conditions in which the above relationship is not established, in [TBS determination method] 1] to [TBS determination method 3] or a method similar thereto, by applying the above [another embodiment of modification of step 2 in the TBS determination method], a method of determining the TBS by integerizing parameters required in each calculation process may be applied.

As another embodiment, different TBS determination methods may be applied according to a modulation order or a code rate. In the current 3GPP Release-15 or a compatible 5G NR system, Equation 1 does not establish regardless of the $N'_{RE}$ value except for a case of ($Q_m$=2, R=64/1024, $A_R$=64) or ($Q_m$=1, R=128/1024, $A_R$=128) in the MCS index table. Therefore, in case that the modulation order and the code rate correspond to ($Q_m$=2, R=64/1024, $A_R$=64) or ($Q_m$=1, R=128/1024, $A_R$=128), [TBS determination method 1] to [TBS determination method 3] or a method similar thereto is applied to determine the TBS, and in case that the modulation order or code rate does not correspond to ($Q_m$=2, R=64/1024, $A_R$=64) or ($Q_m$=1, R=128/1024, $A_R$=128), in [TBS determination method 1] to [TBS determination method 3] or a method similar thereto, by applying [another embodiment of modification of step 2 in the TBS determination method], a method of determining the TBS by integerizing parameters required in each calculation process may be applied. Here, the combination of the modulation order and the code rate may be indicated through the MCS table and MCS index configuration. (e.g., in case of PUSCH, ($Q_m$=1, R=128/1024, $A_R$=128) or ($Q_m$=2, R=64/1024, $A_R$=128) may be indicated by (MCS table 2, MCS index I$_{MCS}$ = 3), and in case of PDSCH, ($Q_m$=2, R=64/1024, $A_R$=128) may be indicated to (MCS table 3, MCS index I$_{MCS}$ = 3)

As another embodiment, a method of determining different TBSs according to the MCS table configured in the system may be applied. For example, in case that the MCS table including a case of ($Q_m$=2, R=64/1024, $A_R$=64) or ($Q_m$=1, R=128/1024, $A_R$=128) is configured (e.g., MCS table 3 for PDSCH, MCS table 2 for PUSCH), [TBS determination method 1] to [ TBS determination method 3] or a method similar thereto is applied to determine the TBS. In case that the MCS table not including the modulation order or code rate combination is configured (e.g., MCS table 1 or 2 for PDSCH, MCS table 1 for PUSCH), in the [TBS determination method 1] to [TBS determination Method 3] or a method similar thereto, by applying the above [another embodiment of modification of step 2 in the TBS determination method], a method of determining the TBS by integerizing parameters required in each calculation process may be applied. For reference, in case of MCS Table 3 for the PDSCH, in 3GPP Release-15 or Release-16, because a URLLC service, that is, a transport block error probability is highly likely to be used in case requiring a value of substantially (or approximately) about 0.00001, a different TBS determination method may be applied according to whether an instruction related to a target service or transport block error rate of the system or a corresponding MCS table configuration. For reference, because the URLLC service or transport block error probability uses different CQI index tables in a scenario requiring a value of substantially (or approximately) about 0.00001, a different TBS determination method may be applied according to whether an instruction related to a configuration for the CQI index table.

A single PDSCH transport block with a combination of modulation scheme, target code rate and transport block size corresponding to the CQI index, and occupying a group of downlink physical resource blocks termed the CSI reference resource, could be received with a transport block error probability not exceeding: - 0.1, if the higher layer parameter *cqi-Table* in *CSI-ReportConfig* configures 'table1' (corresponding to Table 5.2.2.1-2), or 'table2' (corresponding to Table 5.2.2.1-3), or - 0.00001, if the higher layer parameter *cqi-Table* in *CSI-ReportConfig* configures 'table3' (corresponding to Table 5.2.2.1-4).

As another embodiment of the method for determining a TBS, it may be applied to a process of determining the TBS by configuration the intermediate number to $N_{info}=[N_{RE} \cdot Q_m \cdot R \cdot v]$ or $X=[N_{RE} \cdot Q_m \cdot v \cdot R \cdot 2^{-3}]=[N_{RE} \cdot Q_m \cdot v \cdot A_R \cdot 2^{-13}]$ from the beginning without introducing a temporary intermediate number in [TBS determination method 1] and [TBS determination method 2]. However, in this case, there is a possibility that compatibility with the 5G NR system corresponding to the current 3GPP release-15 may not be maintained. As described above, in case that the $N_{RE} \cdot Q_m \cdot R \cdot v$ value is greater than 3824 and less than 3825, or in case that the $N_{RE} \cdot Q_m \cdot v \cdot R \cdot 2^{-3}$ value is greater than 478 and less than 479, the TBS value is defined differently from the case of configuring the intermediate number to an integer value by applying first to the floor function. That is, in a first communication system conforming to 3GPP Release-15, the TBS value becomes 3840 in case of $3824 < N_{RE} \cdot Q_m \cdot R \cdot v < 3825$, but in a second communication system defined as $N_{info} = [N_{RE} \cdot Q_m \cdot R \cdot v]$, the TBS value becomes 3824 in case of $3824 < N_{RE} \cdot Q_m \cdot R \cdot v < 3825$, which may be defined to different TBS values. The first communication system and the second communication system may be implemented together in a device such as a single communication chip, module, or terminal, and in such a case, the device is characterized in that it includes a process of determining which standard is followed, and then determining differently the TBS according to a range of $N_{RE} \cdot Q_m \cdot R \cdot v$ values based on the $N_{RE}, Q_m, R, v$ value. That is, there is at least one case in which the TBS is determined differently for the same $N_{RE} \cdot Q_m \cdot R \cdot v$ value.

Further, such a method has an advantage in that the intermediate number may be simply determined as an integer type, and that most TBS calculation formulas are also made in an integer type; thus, the operation becomes simpler. Further, when applying the scaling factor S in the process of calculating $N_{info}$ (or X), it may be applied as in $N_{info} = \lfloor S \cdot N_{RE} \cdot R \cdot Q_m \cdot v \rfloor$ (or $X = \lfloor N_{RE} \cdot Q_m \cdot v \cdot A_R \cdot 2^{-(13+s)} \rfloor$ or $X = \lfloor N_{RE} \cdot Q_m \cdot v \cdot R \cdot 2^{-(3+s)} \rfloor$), and the scaling factor may have values such as 0, 0.5, and 0.25, or may be defined to an integer value as illustrated in Table 12. Further, in a first communication system conforming to 3GPP Release-15, in case of $3824 < S \cdot N_{RE} \cdot R \cdot Q_m \cdot v < 3825$, the TBS value becomes 3840, but in a second communication system defined to $N_{info} = \lfloor S \cdot N_{RE} \cdot R \cdot Q_m \cdot v \rfloor$, in case of $3824 < S \cdot N_{RE} \cdot Q_m \cdot R \cdot v < 3825$, the TBS value becomes 3824 and may be defined to different TBS values. The first communication system and the second communication system may be implemented together in a device such as a single communication chip, module, or terminal, and in this case, the device is characterized in that it includes a process in which the TBS is determined differently according to a range of $S \cdot N_{RE} \cdot Q_m \cdot R \cdot v$ value based on the $S, N_{RE}, Q_m, R, v$ value after determining which standard is followed. That is, there is at least one case in which the TBS is determined differently for the same $S \cdot N_{RE} \cdot Q_m \cdot R \cdot v$ value.

Similarly, a simple TBS determination method may be applied using a Schilling function or a rounding function. For example, the TBS may be determined based on an intermediate number such as $N_{info} = \lceil S \cdot N_{RE} \cdot R \cdot Q_m \cdot v \rceil$ or $N_{info} = Round(S \cdot N_{RE} \cdot R \cdot Q_m \cdot v)$. The TBS may be determined based on an intermediate number such as $X = \lceil N_{RE} \cdot Q_m \cdot v \cdot A_R \cdot 2^{-(13+s)} \rceil$, $\lceil N_{RE} \cdot Q_m \cdot v \cdot R \cdot 2^{(3+s)} \rceil$, $Round(N_{RE} \cdot Q_m \cdot v \cdot A_R \cdot 2^{(-13+s)})$, or $Round(N_{RE} \cdot Q_m \cdot v \cdot R \cdot 2^{(-3+s)})$. However, caution is required because these methods may not be compatible with the existing 5G NR system conforming to 3GPP Release-15. (There is at least one case where the TBS is determined differently for the same $N_{RE} \cdot R \cdot Q_m \cdot v$ value or $S \cdot N_{RE} \cdot R \cdot Q_m \cdot v$ value)

In 5G NR, an appropriate code block is configured according to the TBS value determined in this way, and LDPC encoding is performed for each code block. In this case, a process of determining the code block size (CBS) is as follows.

[CBS Determination Method 1]

The input bit sequence for code block segmentation is expressed as $b_0$, $b_1$,... $b_{B-1}$. (B> 0) If B is larger than the maximum code block size $K_{cb}$, segmentation of the input bit sequence is performed, and a CRC of L = 24 bits is additionally added to each code block. For an LDPC basic graph 1, the maximum code block size is $K_{cb} = 8448$, and for an LDPC basic graph 2, the maximum code block size is $K_{cb} = 3840$.

Step 1: Determine the number C of code blocks.

- If $B \leq K_{cb}$, L=0 and C=1, and B'=B.
- Otherwise, L=24, $C = \lceil B/(K_{cb}-L) \rceil$ and $B' = B+C \cdot L$

Step 2: When a bit output from code block segmentation is $cr_0$, $c_{r1}$, ... $c_{r(Kr-1)}$, r means the code block number ($0 \leq r < C$), and Kr (= K) means the number of bits of the code block for the code block number r. Here, K, which is the number of bits included in each code block, is calculated as follows:

- K'=B'/C;
- In case of an LDPC basic graph 1, $K_b$=22.
- In case of an LDPC basic graph 2,

if $B > 640$, $K_b$=10;
if $560 < B \leq 640$, $K_b$=9;
if $192 < B \leq 560$, $K_b$=8;
if $B \leq 192$, $K_b$=6.

Step 3: Among Z values in Table 13, the minimum value $Z_c$ satisfying $K_b \cdot Z \geq K'$ is determined. For the LDPC basic graph 1, it is configured to $K = 22Z_c$, and for the LDPC basic graph 2, it is configured to $K = 10Z_c$.

[Table 13]

| Set index $(i_{LS})$ | Set of lifting sizes (Z) |
|---|---|
| 0 | {2, 4, 8, 16, 32, 64, 128, 256} |
| 1 | {3, 6, 12, 24, 48, 96, 192, 384} |
| 2 | {5, 10, 20, 40, 80, 160, 320} |
| 3 | {7, 14, 28, 56, 112, 224} |
| 4 | {9, 18, 36, 72, 144, 288} |
| 5 | {11, 22, 44, 88, 176, 352} |
| 6 | {13, 26, 52, 104, 208} |
| 7 | {15, 30, 60, 120, 240} |

In step 2 of the [CBS determination method 1], $K_b$ values correspond to columns or column blocks, respectively, corresponding to LDPC information bits in a basic graph (or basic matrix) or a parity check matrix of the LDPC code and corresponds to the maximum value ($=K_b Z_c$) of the LDPC information bit without shortening or zero-padding. For example, even if the number of column blocks (or columns) corresponding to information bits in the parity check matrix (or basic graph) of an LDPC basic graph 2 is 10, in case that it is configured to $K_b$=6, LDPC encoding is substantially performed on the maximum $6Z_c$ bits of information bits, and information bits corresponding to at least $(10-K_b)Z_c=4Z_c$ number of columns in the parity check matrix are shortened or zero-padded. Here, shortening or zero padding may actually allocate a bit value promised by the transmitter and the receiver, such as 0, or may mean not using a corresponding part in the parity check matrix.

Table 13 illustrates candidates of lifting sizes for LDPC encoding and decoding, lifting refers to a technique used for designing or converting a quasi-cyclic LDPC code, and in particular, it refers to a method of supporting LDPC codes of various lengths by converting a following sequence by applying an operation (e.g., modulo or flooring operation) corresponding to a lifting size to a given sequence corresponding to the parity check matrix of the LDPC code. One number included in the sequence of the LDPC code may be a value corresponding to a circulant permutation matrix (or expressed as a circular permutation matrix, or the like).

In step 3 of the [CBS determination method 1], a process of determining a $Z_c$ value by selecting a minimum value satisfying a given condition among Z values of the lifting size based on Table 13 is required. Further, because a set index to which the determined lifting size belongs indicates the parity check matrix of the LDPC code to which the LDPC encoding is to be applied to the code block, the terminal or the base station performs LDPC encoding or decoding based on the parity check matrix of the LDPC code corresponding to the set index to which the determined lifting size belongs. Therefore, in order to perform the [CBS determination method 1], the lifting size table of Table 13 should be stored in the terminal or the base station.

In the [CBS determination method 1], a Zc value may be finally determined using Table 13 including candidate values of a lifting size Z, and the LDPC parity check matrix may be determined accordingly. However, in case that a method of determining a Zc value based on [CBS determination method 1] is applied in a communication system, the set of lifting size candidates as illustrated in Table 13 may be transformed into another form according to the communication system. For example, in case that the TBS size increases from the smallest value to 24, 32, 40, 48, 56, 64, 72, 80, 88, 96, 104,..., if it is fixed to Kb = 6, the corresponding Z value sequentially increases to a value such as 7, 8, 10, 11, 12, 14, 15, 16, 17, 18, 20,.... Therefore, in this case, a lifting size candidate set as illustrated in Table 14 may be used.

[Table 14]

| Set index ($i_{LS}$) | Set of lifting sizes (Z) |
|---|---|
| 0 | {8, 16, 32, 64, 128, 256} |
| 1 | {12, 24, 48, 96, 192, 384} |
| 2 | {10, 20, 40, 80, 160, 320} |
| 3 | {7, 14, 28, 56, 112, 224} |
| 4 | {18, 36, 72, 144, 288} |
| 5 | {11, 22, 44, 88, 176, 352} |
| 6 | {26, 52, 104, 208} |
| 7 | {15, 30, 60, 120, 240} |

If 16 is included as the TBS size, the lifting size set for $i_{LS}$ = 1 in Table 14 is changed to {6, 12, 24, 48, 96, 192, 384}, and if 8 is included as the TBS size, the lifting size set for $i_{LS}$ = 0 is changed to {4, 8, 16, 32, 64, 128, 256}.

When one CB is input to the LDPC encoder, parity bits may be added and output. In this case, the size of the parity bit may vary according to the LDPC base graph. According to a method of rate matching, all parity bits generated by LDPC coding may be transmittable or only some of the parity bits may be transmittable. A method of processing all parity bits generated by LDPC coding to be transferable is referred to as 'full buffer rate matching (FBRM)', and a method of limiting the number of transmittable parity bits is referred to as 'LBRM (limited buffer rate matching)'. When resources are allocated for data transmission, the LDPC encoder output is input to a circular buffer, and bits of the buffer are repeatedly transmitted as much as the allocated resources.

Assuming that a length of the circular buffer is Ncb and the number of all parity bits generated by LDPC coding

$$N_{ref} = \left\lfloor \frac{TBS_{LBRM}}{C \cdot R_{LBRM}} \right\rfloor$$

is N, in case of the FBRM method, $N_{cb} = N$. In case of the LBRM method, $N_{cb} = \min(N, N_{ref})$,

, and $R_{LBRM}$ may be determined to 2/3. The above-described method of determining the TBS may be used for determining $TBS_{LBRM}$. In this case, the number of layers may be assumed to the maximum number of layers supported by the terminal in the corresponding cell, in case that the modulation order is configured to the maximum modulation order configured to the terminal in the corresponding cell or is not configured, the modulation order may be assumed to 64-QAM, the code rate may be assumed to 948/1024, which is the maximum code rate, it may be assumed that $N_{RE} = 156 \cdot n_{PRB}$ and that $n_{PRB} = n_{PRB,LBRM}$. $n_{PRB,LBRM}$ may be defined as illustrated in Table 15.

[Table 15]

| Maximum number of PRBs across all configured BWPs of a carrier | $n_{PRB,LBRM}$ |
|---|---|
| Less than 33 | 32 |
| 33 to 66 | 66 |
| 67 to 107 | 107 |
| 108 to 135 | 135 |
| 136 to 162 | 162 |
| 163 to 217 | 217 |

(continued)

| Maximum number of PRBs across all configured BWPs of a carrier | $n_{PRB,LBRM}$ |
|---|---|
| Larger than 217 | 273 |

In the wireless communication system according to various embodiments, the max data rate supported by the terminal may be determined through [Equation 4].

[Equation 4]

$$\text{data rate (in Mbps)} = 10^{-6} \cdot \sum_{j=1}^{J}\left( v_{Layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot \left(1 - OH^{(j)}\right) \right)$$

In [Equation 4], J denotes the number of carriers bundled by carrier aggregation (CA), Rmax = 948/1024, $v_{Layers}^{(j)}$ denotes the maximum number of layers of the carrier of an index j, $Q_m^{(j)}$ denotes the maximum modulation order of the carrier of an index j, $f^{(j)}$ denotes a scaling factor of the carrier of the index j, and $\mu$ denotes subcarrier spacing. $f^{(j)}$ is one value of 1, 0.8, 0.75, and 0.4, and may be reported by the terminal, and $\mu$ may be given as illustrated in [Table 16].

[Table 16]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Here, $T_s^{\mu}$ is an average OFDM symbol length, may be calculated as $T_s^{\mu} = \dfrac{10^{-3}}{14 \cdot 2^{\mu}}$ and $N_{PRB}^{BW(j),\mu}$ is the maximum number of RBs in $BW^{(j)}$. $OH^{(j)}$ is an overhead value, may be given as 0.14 in a downlink and 0.18 in an uplink of FR1 (e.g., bands of 6 GHz or 7.125 GHz or lower), and be given as 0.08 in a downlink and 0.10 in an uplink of FR2 (e.g., bands more than 6 GHz or 7.125 GHz). According to [Equation 4], in a cell having a frequency bandwidth of 100 MHz in 30 kHz subcarrier spacing, a max data rate of the downlink may be calculated as illustrated in [Table 17].

[Table 17]

| $f^{(j)}$ | $v_{Layers}^{(j)}$ | $Q_m^{(j)}$ | Rmax | $N_{PRB}^{BW(j),\mu}$ | $T_s^{\mu}$ | $OH^{(j)}$ | data rate |
|---|---|---|---|---|---|---|---|
| 1 | 4 | 8 | 0.92578125 | 273 | 3.57143E-05 | 0.14 | 2337.0 |
| 0.8 | 4 | 8 | 0.92578125 | 273 | 3.57143E-05 | 0.14 | 1869.6 |
| 0.75 | 4 | 8 | 0.92578125 | 273 | 3.57143E-05 | 0.14 | 1752.8 |
| 0.4 | 4 | 8 | 0.92578125 | 273 | 3.57143E-05 | 0.14 | 934.8 |

However, an actual data rate that may be measured in actual data transmission of the terminal may be a value obtained by dividing a data amount by a data transmission time. This may be a value obtained by dividing a TB size (TBS) in 1 TB transmission or the sum of TBSs in 2 TB transmission by a TTI length. For example, in a cell having a 100 MHz frequency bandwidth in 30 kHz subcarrier spacing, a maximum actual data rate of the downlink may be determined as illustrated in [Table 18] according to the number of allocated PDSCH symbols.

[Table 18]

| $N_{symb}^{sh}$ | $N_{DMRS}^{PRB}$ | $N_{RE}$ | $N_{RE}$ | $N_{info}$ | n | $N_{info}$ | c | TBS | TTI length (ms) | data rate (Mbps) |
|---|---|---|---|---|---|---|---|---|---|---|
| 3 | 8 | 28 | 7644 | 226453.5 | 12 | 225,280 | 27 | 225,480 | 0,107143 | 2,104.48 |
| 4 | 8 | 40 | 10920 | 323505.0 | 13 | 319,488 | 38 | 319,784 | 0,142857 | 2,238.49 |
| 5 | 8 | 52 | 14196 | 420556.5 | 13 | 417,792 | 50 | 417,976 | 0,178571 | 2,340.67 |
| 6 | 8 | 64 | 17472 | 517608.0 | 13 | 516,096 | 62 | 516,312 | 0.214286 | 2,409.46 |
| 7 | 8 | 76 | 20748 | 614659.5 | 14 | 622,592 | 74 | 622,760 | 0.250000 | 2,491.04 |
| 8 | 8 | 88 | 24024 | 711711.0 | 14 | 704,512 | 84 | 704,904 | 0.285714 | 2,467.16 |
| 9 | 8 | 100 | 27300 | 808762.5 | 14 | 802,816 | 96 | 803,304 | 0.321429 | 2,499.17 |
| 10 | 8 | 112 | 30576 | 905814.0 | 14 | 901,120 | 107 | 901,344 | 0.357143 | 2,523.76 |
| 11 | 8 | 124 | 33852 | 1002865.5 | 14 | 999,424 | 119 | 999,576 | 0.392857 | 2,544.38 |
| 12 | 8 | 136 | 37128 | 1099917.0 | 15 | 1,114,112 | 133 | 1,115,048 | 0.428571 | 2,601.78 |
| 13 | 8 | 148 | 40404 | 1196968.5 | 15 | 1,212,416 | 144 | 1,213,032 | 0.464286 | 2,612.68 |
| 14 | 8 | 160 | 43680 | 1294020.0 | 15 | 1,277,952 | 152 | 1,277,992 | 0.500000 | 2,555.98 |

The max data rate supported by the terminal may be identified through [Table 17], and an actual data rate according to the allocated TBS may be identified through [Table 18]. In this case, according to scheduling information, there may be a case where the actual data rate is greater than the max data rate.

In a wireless communication system, particularly, in an NR system, a data rate that the terminal can support may be mutually agreed between the base station and the terminal. This may be calculated using the maximum frequency band, the maximum modulation order, and the maximum number of layers supported by the terminal. However, the calculated data rate may be different from a value calculated from a transport block size (TBS) and a transmission time interval (TTI) length used for actual data transmission. Accordingly, the terminal may receive allocation of a TBS larger than a value corresponding to a data rate supported by itself, and in order to prevent this, there may be restrictions on the TBS that may be scheduled according to the data rate supported by the terminal. It may be necessary to minimize this case and define an operation of the terminal in this case. Further, when applying LBRM in a communication system defined in the current NR, a $TBS_{LBRM}$ is determined based on the number of layers or ranks supported by the terminal, and the like, but the process is inefficient or the parameter configuration is ambiguous; thus, there is a problem that it is difficult to stably apply LBRM in the base station or the terminal. Hereinafter, the disclosure will describe various embodiments for solving these problems.

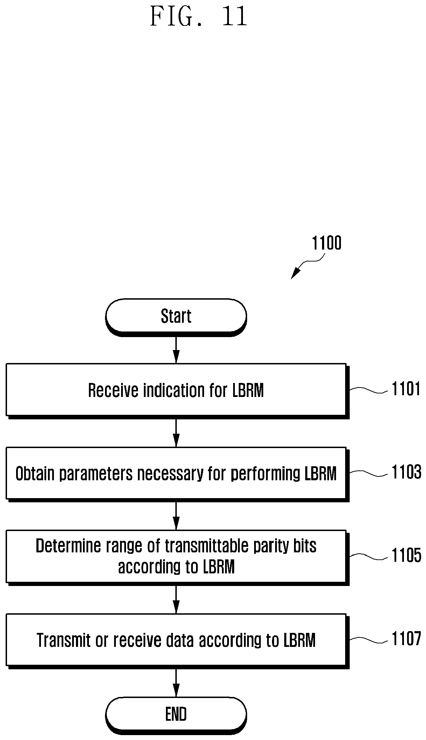

FIG. 11 is a flowchart of a terminal for transmitting or receiving data in a communication system according to various embodiments of the disclosure. FIG. 11 illustrates a method of operating a terminal 120.

With reference to FIG. 11, in step 1101, the terminal receives an indication for LBRM. The indication for LBRM may be included in information for configuring a channel (e.g., PUSCH or PDSCH) used for transmitting or receiving data. For example, information for configuring a channel may be received through an RRC message. For example, LBRM may be enabled by a 'rateMatching' parameter in a PUSCH-ServingCellConfig.

In step 1103, the terminal obtains parameters necessary for performing LBRM. Parameters for performing LBRM may include at least one of at least one parameter or code rate for calculating a TB size. Further, the parameter for calculating the TB size may include at least one of a maximum number of layers or a band combination applied to perform CA.

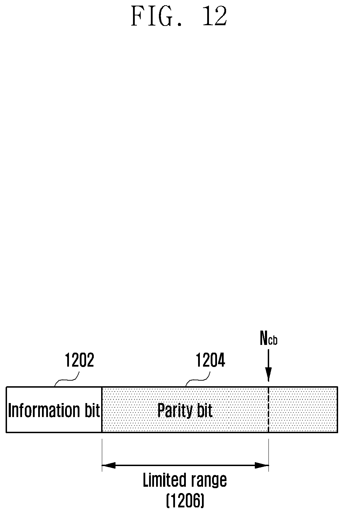

In step 1105, the terminal determines a range of transmittable parity bits according to LBRM. LBRM is a technique of treating a part of parity bits as transmittable bits, and transmitting at least one buffer of the transmittable bits through a channel. For example, as illustrated in FIG. 12, bits within a limited range 1206 indicated by Ncb among parity bits 1204 generated from information bits 1202 are transmittable, and the remaining bits are not transmitted even if a redundancy version (RV) is changed. Accordingly, the terminal may determine which range of parity bits is to be treated as transmittable or receivable bits. Treating the bits as transmittable bits may be accomplished by inputting the bits to a circular buffer.

In step 1107, the terminal transmits or receives data according to LBRM. In other words, in performing encoding or decoding, the terminal performs encoding or decoding in consideration of parity bits within a limited range. In case of downlink communication, the terminal may operate a buffer of a size corresponding to a limited range in order to buffer received data. In case of uplink communication, the terminal may generate parity bits by encoding information bits, and include at least one parity bit selected within a limited range among the generated parity bits in the transmission data.

As described with reference to FIG. 11, the terminal may perform LBRM. To perform LBRM, the terminal determines a limited range for parity bits. To this end, it is required to determine a parameter (e.g., a band combination or maximum number of layers applied for a CA operation) necessary for determining a limited range.

Hereinafter, embodiments for determining a parameter necessary for determining a limited range will be described.

Uplink LBRM Implementation Plan

Various embodiments described below are for efficient uplink LBRM (e.g., UL-SCH LBRM or PUSCH LBRM) in data transmission. In case that PUSCH-LBRM is applied, a $TBS_{LBRM}$ may be determined based on the following configuration.

[Configuration A for rate matching considering PUSCH-LBRM]

The maximum number X of layers for one TB may be determined as follows including at least two configuration steps in Table 19.

[Table 19]

| Configuration | Contents |
| --- | --- |
| 0 | If the higher layer parameters maxMIMO-Layers-BWP of PUSCH-ServingCellConfigBWP of all BWPs of the serving cell are configured, X is given by the maximum value across all the maxMIMO-Layers-BWP values of the serving cells |
| 1 | Else if the higher layer parameter maxMIMO-Layers of PUSCH-ServingCellConfig of the serving cell is configured, X is given by that parameter |
| 2 | Else if the higher layer parameter maxRank of pusch-Config of the serving cell is configured, X is given by the maximum value of maxRank across all BWPs of the serving cell |
| 3 | otherwise, X is given by the maximum number of layers for PUSCH supported by the UE for the serving cell |

In the embodiment of [Table 19], in case that the maximum number of layers is configured for a plurality of BWPs, X may be determined as the maximum value among the maximum number of layers. According to another embodiment, X may be determined as a minimum value among the maximum number of layers configured for a plurality of BWPs. According to another embodiment, X may be determined to a value (e.g., a median value, an average value, and the like) determined based on the maximum number of layers configured for the plurality of BWPs.

Further, in the embodiment of [Table 19], in case that maximum ranks are configured for a plurality of BWPs, X may be determined as the maximum value among the maximum ranks. According to another embodiment, X may be determined as a minimum value among maximum ranks configured for a plurality of BWPs. According to another embodiment, X may be determined as a value (e.g., a median value, an average value, and the like) determined based on the maximum ranks configured for the plurality of BWPs.

In the embodiment of [Table 19], a configuration 0 and configuration 2 determine X based on all BWPs of the serving cell. However, according to another embodiment, X may be determined based on all active BWPs, active BWPs, or all configured BWPs. According to another embodiment, X may be determined based on a plurality of BWPs satisfying a specific condition.

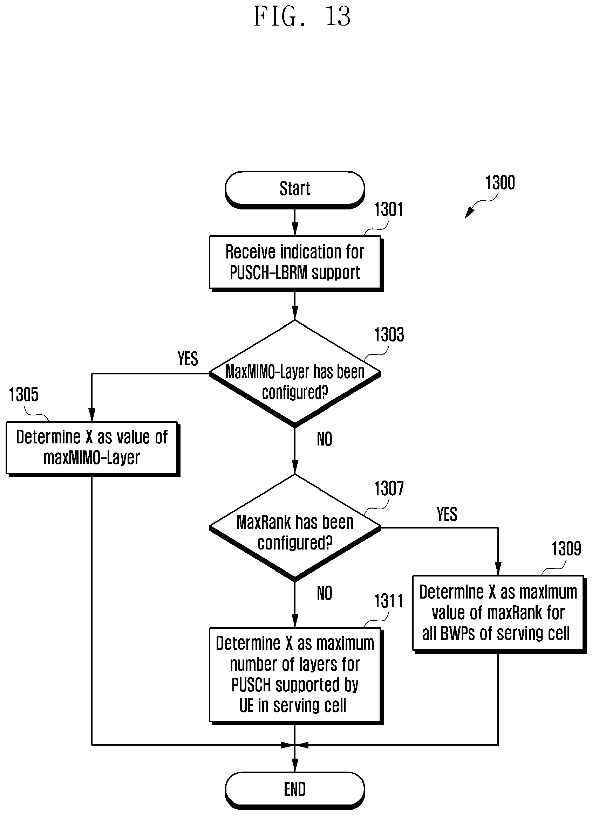

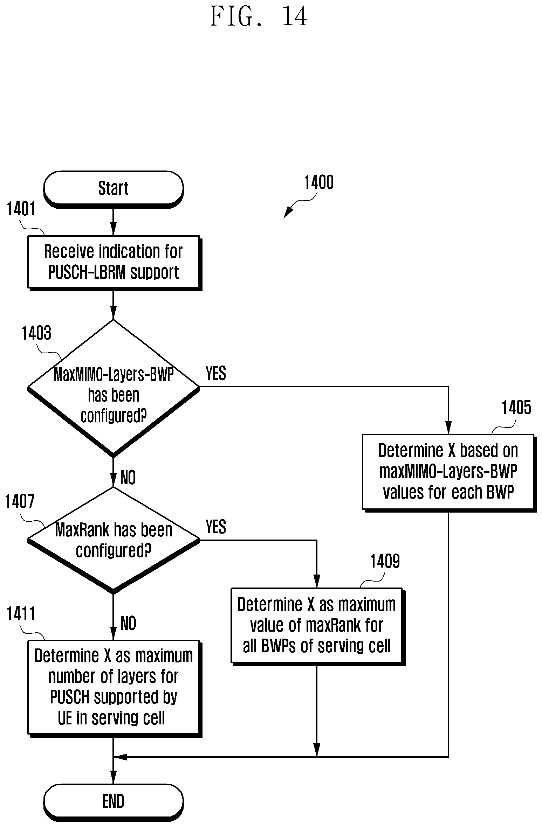

Operations of the terminal for PUSCH-LBRM based on the above configuration will be described below with reference to FIGS. 13 and 14.

FIG. 13 is a flowchart 1300 of a terminal for determining the maximum number of layers in a wireless communication system according to various embodiments of the disclosure. FIG. 13 illustrates an operation method of the terminal 120.

With reference to FIG. 13, in step 1301, the terminal may receive an indication for PUSCH-LBRM. In step 1303, the terminal may identify whether a parameter maxMIMO-Layer has been configured. If a maxMIMO-Layer has been configured, in step 1305, the terminal may determine X as a value of maxMIMO-Layer. If a maxMIMO-Layer has not been configured, in step 1307, the terminal may identify whether a parameter maxRank has been configured. If a maxRank has been configured, in step 1309, the terminal determines a maximum value of a maxRank for all BWPs of the serving cell to X. If a maxRank has not been configured, in step 1311, the terminal may determine the maximum number of layers for a PUSCH supported by the terminal in the serving cell to X.

FIG. 14 is another flowchart 1400 of a terminal for determining the maximum number of layers in a wireless communication system according to various embodiments of the disclosure. FIG. 14 illustrates a method of operating the terminal 120.

FIG. 14 illustrates an embodiment except for steps 1303 and 1305 in the embodiment of FIG. 13. In one example, the embodiment of FIG. 14 may be applied in case that a parameter maxMIMO-Layers value included in a PUSCH-ServingCellConfig configured in the base station is the same as a maxRank value included in a pusch-Config.

With reference to FIG. 14, in step 1401, the terminal may receive an indication for PUSCH-LBRM. In step 1403, the terminal may identify whether a parameter maxMIMO-Layers-BWP has been configured. Here, the parameter maxMIMO-Layers-BWP may be configured for each BWP for at least one BWP. If the parameter maxMIMO-Layers-BWP has been configured, in step 1405, the terminal determines X based on maxMIMO-Layers-BWP values for each BWP. For example, X may be determined as any one of a maximum value, a minimum value, an average value, or a median value of maxMIMO-Layers-BWP values. In this case, BWPs considered for determining an X value may be all BWPs, activated BWPs, or BWPs satisfying a specific condition.

If the parameter maxMIMO-Layers-BWP has not been configured, in step 1407, the terminal may identify whether a parameter maxRank has been configured. If a maxRank has been configured, in step 1409, the terminal may determine a maximum value of a maxRank for all BWPs of the serving cell to X. If a maxRank has not been configured, in step 1411, the terminal may determine the maximum number of layers for a PUSCH supported by the terminal in the serving cell to X.

When the rate matching process in consideration of the above-described PUSCH-LBRM is rearranged, the changed configuration may be applied as follows.

[Configuration B for rate matching considering PUSCH-LBRM]

The maximum number X of layers for one TB may be determined as follows including at least two configuration steps in Table 20.

[Table 20]

| Confi gurati on | Contents |
|---|---|
| 0 | If the higher layer parameters maxMIMO-Layers-BWP of PUSCH-ServingCellConfigBWP of all BWPs of the serving cell are configured, X is given by the maximum value among maxMIMO-Layers-BWP |
| 1 | Else if the higher layer parameter maxRank of pusch-Config of the serving cell is configured, X is given by the maximum value of maxRank across all BWPs of the serving cell |
| 2 | otherwise, X is given by the maximum number of layers for PUSCH supported by the UE for the serving cell |

In the embodiment of [Table 20], in case that the maximum number of layers is configured for a plurality of BWPs, X may be determined to the maximum value among the maximum number of layers. According to another embodiment, X may be determined to a minimum value among the maximum number of layers configured for a plurality of BWPs. According to another embodiment, X may be determined to a value (e.g., a median value, an average value, and the like) determined based on the maximum number of layers configured for the plurality of BWPs.

Further, in the embodiment of [Table 20], in case that maximum ranks are configured for a plurality of BWPs, X may be determined as a maximum value among the maximum ranks. According to another embodiment, X may be determined as a minimum value among the maximum ranks configured for a plurality of BWPs. According to another embodiment, X may be determined as a value (e.g., a median value, an average value, and the like) determined based on the maximum ranks configured for a plurality of BWPs.

Further, a configuration 0 and a configuration 1 of the embodiment of [Table 20] determine X based on all BWPs of the serving cell, but according to the system, X may be used based on all active BWPs or all configured BWPs, or may be used based on a plurality of BWPs satisfying specific conditions.

For reference, in the embodiments of [Table 19] and [Table 20], a system in which signaling information including maxMIMO-Layers-BWP is PUSCH-ServingCellConfigBWP has been described, but this is only an example of a method of indicating or instructing a BWP-specific maxMIMO-Layer value, and a name or a parameter of such signaling information may be generally configured to a different name according to a communication system or version information of the system.

According to another embodiment, for rate matching in consideration of PUSCH-LBRM, parameters may be configured in consideration of a band combination and a feature set related to at least one serving cell (or at least one configured serving cell). For example, the maximum number of layers may be determined in consideration of a signaled or indicated band combination and function set related to the serving cell. An embodiment for this will be described in the following [Configuration C for Rate Matching Considering PUSCH-LBRM].

[Configuration C for rate matching considering PUSCH-LBRM]

The maximum number X of layers for one TB is determined as follows including at least two configuration steps in Table 21.

[Table 21]

| Confi gurati on | Contents |
|---|---|
| 0 | If the higher layer parameter maxMIMO-Layers of PUSCH-ServingCellConfig of the serving cell is configured, X is given by that parameter |

(continued)

| Configuration | Contents |
|---|---|
| 1 | Else if the higher layer parameter maxRank of pusch-Config of the serving cell is configured, X is given by the maximum value of maxRank across all BWPs of the serving cell |
| 2 | otherwise, X is given by the maximum number of layers for PUSCH supported by the UE for any signaled band combination and feature set consistent with the serving cell |

In a configuration 2 of [Table 21], because the terminal does not have a common understanding of a currently applied band combination with the base station, X may be determined as the largest supported number of layers in consideration of all band combinations.

For successful decoding, in rate matching schemes in consideration of the above-described LBRM, the base station and the terminal or the transmitter and the receiver should maintain the same configuration or promised configuration. In this case, various combinations of the components mentioned in the disclosure are possible.

The configuration steps included in the configuration methods of Tables 19, 20, and 21 are not necessarily included. For example, in case of Table 19, in case that the system does not require a configuration condition related to a maxRank, the configuration 2 may be omitted or replaced with another configuration. Further, the order of configuration steps included in the configuration methods of Tables 19, 20, and 21 may be changed. For example, in case of Table 19, if the configuration of the serving cell is prioritized over the configuration of the BWP of the serving cell, the order may be changed by redefining the configuration 0 and configuration 1 to the configuration 1 and configuration 0, respectively. Not only that, it is also possible to change the configuration order and omit some configurations (e.g., configuration 2) at the same time. Further, each of configurations in Tables 19, 20, and 21 may be applied interchangeably. For example, configurations in consideration of the band combination, as in a configuration 2 of Table 21, may be applied to one of the configurations of Table 19 or 20.

Downlink LBRM Implementation Plan

Various embodiments to be described below relate to efficient downlink LBRM (e.g., PDSCH-LBRM, DL-SCH LBRM, or PCH LBRM) in data transmission. Hereinafter, the disclosure will describe an embodiment of PDSCH-LBRM, but the described embodiment may also be applied to DL-SCH LBRM or PCH LBRM.

A $TBS_{LBRM}$ is determined based on the maximum number of layers of a PUSCH or a PDSCH configured in higher layer signaling (e.g., RRC signaling). However, because the maximum number of layers is not determined until information on UE capability is reported from the UE to the base station, a problem may occur in applying LBRM.

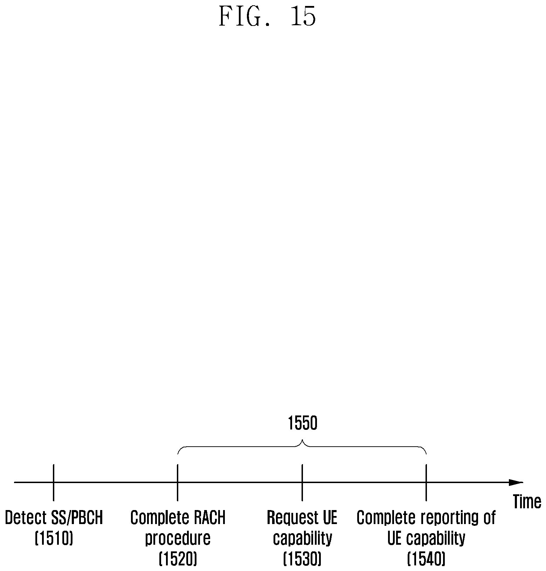

FIG. 15 is a diagram illustrating an example of a section in which ambiguity of parameters required to perform LBRM occurs in a wireless communication system according to various embodiments of the disclosure. FIG. 15 illustrates an example of events occurring in an initial access process of the terminal. With reference to FIG. 15, an SS/PBCH is detected by the UE at a first time point 1510, a RACH procedure is completed at a second time point 1520, UE capability information is requested from the base station to the UE at a third time point 1530, and reporting of UE capability information from the UE to the base station is completed at a fourth time point 1540.

In the example of FIG. 15 described above, during an interval 1550 between the second time point 1520 and the fourth time point 1540, there is a possibility that configurations for the maximum number of layers of a PUSCH or PDSCH between the base station and the UE are different from each other. In this case, PUSCH decoding in the base station may not be appropriately performed, and PDSCH decoding in the UE may not be appropriately performed. In other words, because the UE cannot immediately decode the PDSCH after the RACH procedure, the UE may not receive at least some or all of the RRC message. Therefore, until UE capability is reported to the base station, a rule between the base station and the UE for determining the maximum number of layers of the PUSCH or the PDSCH is required.

As one of solutions to the above problem, it may be considered to fix a value of the maximum number X of layers to a predetermined value or integer during the interval 1550 of FIG. 15. For example, it may be considered that a specific integer such as X = 1 or X = 2 is used or that it is determined to a specific value mandated to the UE as the maximum number of layers in the band. In the following embodiments, X = 1 is exemplified, but the disclosure is not limited thereto.

[Configuration A for rate matching considering PDSCH-LBRM]

The maximum number of layers for one TB is determined by the minimum of X and 4 calculated including at least two configuration steps in Table 22.

[Table 22]

| Configuration | Contents |
| --- | --- |
| 0 | If the higher layer parameters maxMIMO-Layers-BWP of PDSCH-ServingCellConfigBWP for all BWPs of the serving cell are configured, X is given by the maximum value across all the maxMIMO-Layers-BWP values of the serving cells. |
| 1 | Else if the higher layer parameter maxMIMO-Layers of PDSCH-ServingCellConfig of the serving cell is configured (or given), X is given by that parameter |
| 2 | Else if the higher layer parameter maxNumberMIMO-LayersPDSCH is configured (or given), X is given by that parameter |
| 3 | otherwise, X = 1 |

All of configuration steps included in the configuration methods of Table 22 are not necessarily included. For example, in case that a configuration 2 of Table 22 is unnecessary in the system, it may be omitted or replaced with another configuration. For example, according to another embodiment, the configuration 2 in [Table 22] may be replaced with the following conditions.

[Table 23]

| Configuration | Contents |
| --- | --- |
| 2 | - If the higher layer parameters maxMIMO-Layers-BWP of PDSCH-ServingCellConfigBWP of all BWPs of the serving cell are configured, X is given by the maximum value among maxMIMO-Layers.- else if the higher layer parameter maxNumberMIMO-LayersPDSCH is configured (or given), X is given by the maximum number of layers for PDSCH supported by the UE for the serving cell. |

Further, the order of the configuration steps included in the configuration methods of Table 22 may be changed. For example, if the configuration of the serving cell is prioritized over the configuration of the BWP of the serving cell, the order may be changed by redefining configurations 0 and 1 to configurations 1 and 0, respectively. Not only that, to change the configuration order in this way and to omit some configurations or to replace them with other types are also applicable at the same time.

In a configuration 3 of [Table 22], X may be configured to an integer different from 1 or may be configured to a different parameter. For reference, a process of determining X based on all BWPs of the serving cell in the embodiment of [Table 22] or [Table 23] may be used based on all active BWPs or all configured BWPs according to a system or may be used based on a plurality of BWPs satisfying a specific condition. Further, by briefly summarizing configurations 2 and 3 of Table 22, in case of not corresponding to configurations 0 and 1, it may be replaced by determining X to the maximum number of layers for PDSCH supported by the UE for the serving cell.

For reference, in the embodiments of [Table 22] and [Table 23], a system in which signaling information including maxMIMO-Layers-BWP is PDSCH-ServingCellConfigBWP has been described, but this is only an example of a method of indicating a BWP-specific maxMIMO-Layer value, and a name or parameter of such signaling information may be generally configured to a different name according to a communication system or version information of the system. For example, a configuration 0 of Table 22 is only an embodiment of a method of determining X as the maximum value of all BWP-specific maxMIMO-layers values of the serving cell in case that all BWPs of the serving cell are generally configured to maxMIMO-layers.

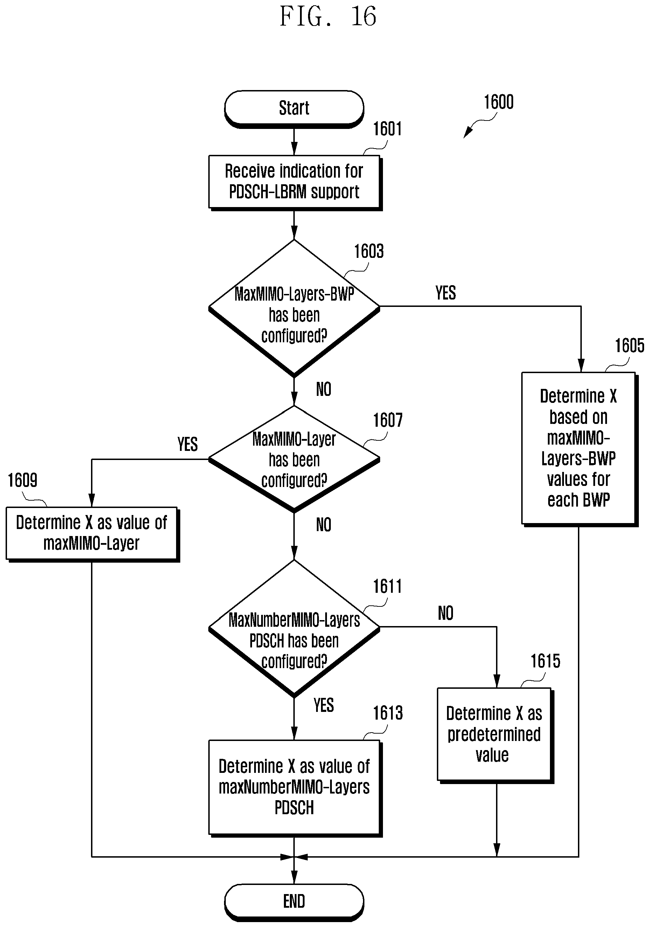

The operation of the UE according to the rules illustrated in [Table 22] is described with reference to FIG. 16.

FIG. 16 is another flowchart 1600 of a terminal for determining the maximum number of layers in a wireless communication system according to various embodiments of the disclosure. FIG. 16 illustrates an operation method of the terminal 120.

With reference to FIG. 16, in step 1601, the UE may receive an indication for PDSCH-LBRM. In step 1603, the UE may identify whether a parameter maxMIMO-Layers-BWP has been configured. Here, the parameter maxMIMO-Layers-BWP may be configured for each BWP for at least one BWP. If a parameter maxMIMO-Layers-BWP has been configured, in step 1605, the UE may determine X based on maxMIMO-Layers-BWP values for each BWP. For example, X may be determined to any one of a maximum value, a minimum value, an average value, and a median value of maxMIMO-Layers-BWP values. In this case, the considered BWPs may be all BWPs, activated BWPs, or BWPs satisfying a specific condition.

If a parameter maxMIMO-Layers-BWP has not been configured, in step 1607, the UE may identify whether a parameter maxMIMO-Layer has been configured. If a maxMIMO-Layer has been configured, in step 1609, the UE may determine X as a value of maxMIMO-Layer. If a maxMIMO-Layer has not been configured, in step 1611, the UE may identify whether a parameter maxNumberMIMO-LayersPDSCH has been configured. If a maxNumberMIMO-LayersPDSCH has been configured, in step 1613, the UE may determine X as a value of maxNumberMIMO-LayersPDSCH. If a maxNumberMIMO-LayersPDSCH has not been configured, in step 1615, the UE may determine X to a predetermined value (e.g., 1).

According to another embodiment, parameters may be configured in consideration of a band combination and function set related to at least one serving cell (or at least one configured serving cell) for rate matching in consideration of PDSCH-LBRM. For example, in determining the maximum number of layers, the maximum number of layers may be determined in consideration of any signaled or indicated band combination and function set related to the serving cell. An embodiment of this will be described in the following [Configuration B for Rate Matching Considering PDSCH-LBRM].

[Configuration B for rate matching considering PDSCH-LBRM]

The maximum number of layers for one TB for DL-SCH/PCH is given by the minimum of X and 4, where

[Table 24]

| Confi gurati on | Contents |
|---|---|
| 1 | If the higher layer parameter maxMIMO-Layers of PDSCH-ServingCellConfig of the serving cell is configured, X is given by that parameter |
| 2 | otherwise, X is given by the maximum number of layers for PDSCH supported by the UE for any signaled band combination and feature set consistent with the serving cell |

In a configuration 2 of [Table 24], because the UE does not have a common understanding of the currently applied band combination with the base station, X may be determined as the largest supported number of layers in consideration of all band combinations. For reference, each of configurations in Tables 22, 23, and 24 may be applied interchangeably. For example, configurations in consideration of the band combination, as in configuration 2 of Table 24, may be applied to one of the configurations of Table 22 or 23.

A specific embodiment of the parameter configuration for applying LBRM of the disclosure may be expressed as follows.

[Configuration C for rate matching considering PDSCH-LBRM]

Configuration 1: The maximum number of layers (v) for one TB is configured to the smaller (or the smaller value or the same value) of two by comparing a maxNumberMIMO-LayersPDSCH with 4 when the maxNumberMIMO-LayersPDSCH is configured in higher layer signaling. If maxNumberMIMO-LayersPDSCH is not configured, the maximum number of layers for one TB is configured to 1.

Configuration 2: If a mcs-Table is configured to qam256 in higher layer signaling, it is assumed that the maximum modulation order $Q_m= 8$. Otherwise, it is assumed that the maximum modulation order $Q_m=6$.

Configuration 3: The maximum code rate is configured to R=948/1024.

Configuration 4: It is configured to $N_{RE} = 156 * N_{PRB,LBRM}$. However, the $N_{PRB,LBRM}$ values mean the maximum number of PRBs across all configured BWPs for a carrier.

The above-described configurations may be expressed as follows.

- if maxNumberMIMO-LayersPDSCH provided,

    v = min(maxNumberMIMO-LayersPDSCH, 4);
    else

    v = 1;

- if mcs-Table = qam256,

Qm = 8;
Else

Qm = 6;

- R = 948/1024;

- $N_{RE} = 156 \cdot N_{PRB,LBRM}$

As in the above-mentioned [Configuration C for rate matching considering PDSCH-LBRM], if a parameter necessary for determining the maximum number of layers for one TB is configured in higher layer signaling, the maximum number of layers may be determined based on the configured value. However, in case that the corresponding parameters are not configured in higher layer signaling, the maximum number of layers may be configured to a predetermined value (e.g., v = 1, 2, 3, or ...,) or to a value determined according to a predetermined rule.

Similarly, if parameters necessary for determining the maximum modulation order are configured to higher layer signaling, the maximum modulation order may be determined based on the configured value. However, in case that corresponding parameters are not configured to higher layer signaling, the maximum modulation order may be configured to a predetermined value or to a value determined according to a predetermined rule.

Further, the conditions for the mcs-Table may be modified in various forms. For example, according to the BWP of the serving cell, the maximum modulation order may be configured according to whether qam256 has been configured to the mcs-Table. For example, various methods, may be implemented, such as Qm = 8 in case that qam256 has been configured for a mcs-Table for one or more BWPs, or Qm = 8 in case that qam256 has been configured for a mcs-Table for all BWPs. Further, a similar method may be implemented based on a value of a mcs-TableTransformPrecoder instead of the mcs- Table.

Various embodiments described above have been described focusing on the operation of the UE. However, for encoding or decoding to which LBRM is applied in the base station, the base station may perform the same parameter configuration operation as that of the UE, and then perform encoding or decoding. In this case, the operation of the base station is similar to the above-described operation of the UE. Further, various combinations of a PUSCH-LBRM operation and a PDSCH-LBRM operation proposed in the disclosure may be applied to the LBRM method of the base station and the UE. In other words, in using the rate matching schemes in consideration of the above-described LBRM for successful decoding, in order for the base station and the UE or the transmitter and the receiver to maintain the same configuration or the promised configuration, various combinations of configurations mentioned in the disclosure are possible.

In general, LBRM may affect a performance because some of the parity may not be transmitted due to buffer limitations. For this reason, the base station or the UE may configure the MCS so that LBRM is not applied to the maximum or is minimized. For example, after calculating the TBS for each MCS, the base station or the UE may determine whether LBRM is applied in case of scheduling with each MCS, and may not use the MCS to which LBRM is determined to be applied. In other words, the base station or the UE may use one MCS among MCSs to which LBRM is not applied. In some cases, even if LBRM is applied, in order to minimize the effect, the base station or the UE may configure a relatively high or highest MCS among MCS to which LBRM is applied as the final MCS. Here, the determination on whether LBRM is applied may be made by comparing the N value and the $N_{ref}$ value for each MCS. For example, if $N > N_{ref}$, LBRM may be applied, otherwise LBRM may not be applied.

As described above, a method of controlling the application of LBRM through an MCS configuration may be applied differently according to a stand-alone (SA) operation or a non-stand alone (NSA) operation in a system after 5G. In case of a communication system or network to which the SA operation method is applied, the application of LBRM is controlled through the MCS configuration, but in case of a communication system or network to which the NSA operation method is applied, the control on whether to apply LBRM through the MCS configuration may not be applied. Conversely, in case of a communication system or network to which the NSA operation method is applied, the application of LBRM is controlled through the MCS configuration, but in case of a communication system or network to which the SA operation method is applied, the control on whether LBRM is applied through the MCS configuration may not be applied. Further, although the application of LBRM is controlled through the MCS configuration for all of SA/NSA operation methods, specific rules may be defined differently. Here, the SA operation is a method in which a first cellular network (e.g., legacy network) and a second cellular network (e.g., 5G network) are independently operated, and the NSA operation is a method in which the first cellular network and the second cellular network are connected to each other and are operated. When two networks are connected and operated, it means that at least one network controls the operation of the other network.

Methods according to the embodiments described in the claims or specifications of the disclosure may be implemented in the form of hardware, software, or a combination of hardware and software.

When implemented in software, a computer readable storage medium storing one or more programs (software modules) may be provided. One or more programs stored in the computer readable storage medium are configured for execution by one or more processors in an electronic device. One or more programs include instructions for causing an electronic device to execute methods according to embodiments described in claims or specifications of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), other types of optical storage devices, or magnetic cassettes. Alternatively, such programs may be stored in a memory configured with a combination of some or all thereof. Further, each configuration memory may be included in the plural.

Further, the program may be stored in an attachable storage device that may access through a communication network such as Internet, Intranet, a local area network (LAN), a wide area network (WAN), or a storage area network (SAN), or a communication network configured with a combination thereof. Such a storage device may access to a device implementing an embodiment of the disclosure through an external port. Further, a separate storage device on the communication network may access to the device implementing the embodiment of the disclosure.

In the specific embodiments of the disclosure described above, components included in the disclosure are expressed in the singular or the plural according to the presented specific embodiments. However, the singular or plural expression is appropriately selected for the presented situation for convenience of description, and the disclosure is not limited to the singular or plural components, and even if the component is expressed in the plural, the component may be configured with the singular, or even if the component is expressed in the singular, the component may be configured with the plural.

Although specific embodiments have been described in the detailed description of the disclosure, various modifications are possible without departing from the scope of the disclosure. Therefore, the scope of the disclosure should not be limited to the described embodiments and should be defined by the claims described below as well as equivalents to the claims.

**Claims**

1. A method performed by a terminal of a communication system, the method comprising:

   receiving, from a base station, information indicating limited buffer rate matching (LBRM);
   identifying a parameter related to the maximum number of layers for one transport block;
   identifying the maximum number of layers for the one transport block based on the parameter;
   identifying a transport block size (TBS) to which the LBRM is applied based on the determined maximum number of layers; and
   transmitting or receiving data to or from the base station based on the TBS,
   wherein the parameter is identified based on at least one of a first maximum number of multiple-input-multiple-output (MIMO) layers configured to correspond to a serving cell or a second maximum number of MIMO layers configured to correspond to a bandwidth part (BWP).

2. The method of claim 1, wherein, in case that the first maximum number of MIMO layers and the second maximum number of MIMO layers are not configured, the parameter is identified as a maximum value of a maximum rank configured for each BWP of the serving cell.

3. The method of claim 1, wherein, in case that the first maximum number of MIMO layers and the second maximum number of MIMO layers are not configured and that a maximum rank is not configured for each BWP of the serving cell, the parameter is identified as the maximum number of layers supported by the terminal for a channel through which the data is transmitted or received in the serving cell.

4. The method of claim 1, wherein, in case that the transport block is related to an uplink, the maximum number of layers for the one transport block is identified as the same value as that of the parameter, and
   wherein, in case that the transport block is related to a downlink, the maximum number of layers for the one transport block is identified to the smaller of the parameter and 4.

5. A method performed by a base station of a communication system, the method comprising:

   transmitting, to a terminal, information indicating limited buffer rate matching (LBRM);
   identifying a parameter related to a maximum number of layers for one transport block;
   identifying the maximum number of layers for the one transport block based on the parameter;

identifying a transport block size (TBS) to which the LBRM is applied based on the determined maximum number of layers; and

transmitting or receiving data to or from the terminal based on the TBS,

wherein the parameter is identified based on at least one of a first maximum number of multiple-input-multiple-output (MIMO) layers configured to correspond to a serving cell or a second maximum number of MIMO layers configured to correspond to a bandwidth part (BWP).

6. The method of claim 6, wherein, in case that the first maximum number of MIMO layers and the second maximum number of MIMO layers are not configured, the parameter is identified as a maximum value of a maximum rank configured for each BWP of the serving cell.

7. The method of claim 6, wherein, in case that the first maximum number of MIMO layers and the second maximum number of MIMO layers are not configured and that a maximum rank is not configured for each BWP of the serving cell, the parameter is identified as the maximum number of layers supported by the terminal for a channel through which the data is transmitted or received in the serving cell.

8. The method of claim 6, wherein, in case that the transport block is related to an uplink, the maximum number of layers for the one transport block is identified as the same value as that of the parameter,

wherein, in case that the transport block is related to a downlink, the maximum number of layers for the one transport block is identified to the smaller of the parameter and 4.

9. A terminal of a communication system, the terminal comprising:

a transceiver; and

a controller configured to receive information indicating limited buffer rate matching (LBRM) from a base station, to identify a parameter related to the maximum number of layers for one transport block, to identify the maximum number of layers for the one transport block based on the parameter, to identify a transport block size (TBS) to which the LBRM is applied based on the determined maximum number of layers, and to transmit or receive data to or from the base station based on the TBS,

wherein the parameter is identified based on at least one of a first maximum number of multiple-input-multiple-output (MIMO) layers configured to correspond to a serving cell or a second maximum number of MIMO layers configured to correspond to a bandwidth part (BWP).

10. The terminal of claim 9, wherein, in case that the first maximum number of MIMO layers and the second maximum number of MIMO layers are not configured, the parameter is identified as a maximum value of a maximum rank configured for each BWP of the serving cell.

11. The terminal of claim 9, wherein, in case that the first maximum number of MIMO layers and the second maximum number of MIMO layers are not configured and that a maximum rank is not configured for each BWP of the serving cell, the parameter is identified as the maximum number of layers supported by the terminal for a channel through which the data is transmitted or received in the serving cell.

12. The terminal of claim 9, wherein, in case that the transport block is related to an uplink, the maximum number of layers for the one transport block is identified as the same value as that of the parameter,

wherein, in case that the transport block is related to a downlink, the maximum number of layers for the one transport block is identified to the smaller of the parameter and 4.

13. A base station of a communication system, the base station comprising:

a transceiver; and

a controller configured to transmit information indicating limited buffer rate matching (LBRM) to a terminal, to identify a parameter related to the maximum number of layers for one transport block, to identify the maximum number of layers for the one transport block based on the parameter, to identify a transport block size (TBS) to which the LBRM is applied based on the determined maximum number of layers, and to transmit or receive data to or from the terminal based on the TBS,

wherein the parameter is identified based on at least one of a first maximum number of multiple-input-multiple-output (MIMO) layers configured to correspond to a serving cell or a second maximum number of MIMO layers configured to correspond to a bandwidth part (BWP).

**14.** The base station of claim 13, wherein, in case that the first maximum number of MIMO layers and the second maximum number of MIMO layers are not configured, the parameter is identified as a maximum value of a maximum rank configured for each BWP of the serving cell.

**15.** The base station of claim 13, wherein, in case that the first maximum number of MIMO layers and the second maximum number of MIMO layers are not configured and that a maximum rank is not configured for each BWP of the serving cell, the parameter is identified as the maximum number of layers supported by the terminal for a channel through which the data is transmitted or received in the serving cell.

FIG. 1

FIG. 2

# FIG. 3

120

330

Controller

310

Communication unit

320

Storage

FIG. 4

210 or 310

402

404

406-1

408

| Encoding and modulation unit | → | Digital beamforming unit | → | Transmission path | → | Analog beamforming unit |

406-N

Transmission path

FIG. 5

Radio frame (514)

Slot (506)

$N_{RB}^{DL}$ or $N_{RB}^{DL}$ number of subcarriers (504)

$N_{RB}$ number of subcarriers (510)

RE
(512)

RB
(508)

$N_{symb}$ number of OFDM symbols
(502)

# FIG. 6A

FIG. 6B

EP 4 064 595 A1

# FIG. 7

EP 4 064 595 A1

# FIG. 8

Generate parity symbol by encoding symbols
at same position or predetermined position with
second channel code

802 — CB 1 | CB 2 | CB 3 | ... | CB N-1 | CB N | PCB 1 | ... | PCB 1 — 804

806 — CRC | CRC | CRC | CRC | CRC | CRC | CRC — 808

CBs segmented from
TB and added CRC

Parity code blocks generated
by second channel code

# FIG. 9A

912

First channel
code encoder

→ Channel →

922

First channel
code decoder

# FIG. 9B

| 914 | 912 | | 922 | 924 |
|---|---|---|---|---|
| Second channel code encoder | First channel code encoder | Channel | First channel code decoder | Second channel code decoder |

# FIG. 10

# FIG. 11

1100

```
          ┌─────────────┐
          │    Start     │
          └─────────────┘
                 │
                 ▼
┌──────────────────────────────────────┐
│      Receive indication for LBRM       │───  1101
└──────────────────────────────────────┘
                 │
                 ▼
┌──────────────────────────────────────┐
│ Obtain parameters necessary for performing LBRM │───  1103
└──────────────────────────────────────┘
                 │
                 ▼
┌──────────────────────────────────────┐
│  Determine range of transmittable parity bits   │
│            according to LBRM                     │───  1105
└──────────────────────────────────────┘
                 │
                 ▼
┌──────────────────────────────────────┐
│   Transmit or receive data according to LBRM    │───  1107
└──────────────────────────────────────┘
                 │
                 ▼
          ┌─────────────┐
          │     END      │
          └─────────────┘
```

# FIG. 12

Information bit | Parity bit

1202     1204     $N_{cb}$

Limited range
(1206)

FIG. 13

## FIG. 14

```
                    Start                      1400
                 1401
                      │
              ┌───────▼────────┐
              │ Receive indication for │
              │ PUSCH–LBRM support │
              └───────┬────────┘
                      │
       1403           │
              ◇ MaxMIMO-Layers-BWP ◇ ──YES──┐
              ◇ has been           ◇         │
              ◇ configured?        ◇         ▼      1405
                      │                ┌──────────────┐
                     NO                │ Determine X based on │
       1407           │                │ maxMIMO-Layers-BWP   │
              ◇ MaxRank has been ◇─YES │ values for each BWP  │
              ◇ configured?      ◇  │  └──────────┬───────┘
                      │            │             │
 1411                NO            ▼  1409        │
              ┌──────────────┐ ┌──────────────┐  │
              │ Determine X as maximum │ │ Determine X as maximum │ │
              │ number of layers for   │ │ value of maxRank for   │ │
              │ PUSCH supported by     │ │ all BWPs of serving cell│ │
              │ UE in serving cell     │ └──────────┬───────┘  │
              └──────┬───────┘            │          │
                     │◄───────────────────┘──────────┘
                     ▼
                    END
```

FIG. 15

1550

Detect SS/PBCH
[1510]

Complete RACH
procedure
[1520]

Request UE
capability
[1530]

Complete reporting of
UE capability
[1540]

Time

## FIG. 16

```
                    ┌─────────────┐
                    │    Start    │
                    └─────────────┘
                           │
                           ▼                    1600
              ┌──────────────────────┐  1601
              │  Receive indication for │
              │   PDSCH-LBRM support    │
              └──────────────────────┘
                           │
                           ▼           1603
                      ◇─────────◇              YES
                    ◇  MaxMIMO-Layers-BWP ◇───────────────┐
                    ◇    has been         ◇               │
                    ◇    configured?      ◇               │
                      ◇─────────◇                         │
                           │ NO                           ▼     1605
                           ▼           1607        ┌──────────────┐
          YES         ◇─────────◇                  │  Determine X │
     ┌────────────◇  MaxMIMO-Layer ◇              │  based on     │
     │            ◇   has been      ◇              │  maxMIMO-     │
     │            ◇   configured?   ◇              │  Layers-BWP   │
     │              ◇─────────◇                    │  values for   │
     ▼                   │ NO                      │  each BWP     │
┌──────────────┐ 1609    ▼                         └──────────────┘
│ Determine X as │   ◇─────────◇  1611
│ value of       │ ◇ MaxNumberMIMO-Layers ◇   NO
│ maxMIMO-Layer  │ ◇  PDSCH has been       ◇────────┐
└──────────────┘ ◇   configured?          ◇         │
     │             ◇─────────◇                       ▼   1615
     │                  │ YES      1613      ┌──────────────┐
     │                  ▼                    │ Determine X as│
     │         ┌──────────────┐              │ predetermined │
     │         │ Determine X as│             │ value         │
     │         │ value of      │             └──────────────┘
     │         │ maxNumberMIMO-│                    │
     │         │ Layers PDSCH  │                    │
     │         └──────────────┘                    │
     │                │                             │
     └────────────────┼─────────────────────────────┘
                      ▼
                ┌─────────────┐
                │     END     │
                └─────────────┘
```

<div style="text-align:center">**INTERNATIONAL SEARCH REPORT**</div>

| International application No. |
| --- |
| **PCT/KR2020/019128** |

| A. | CLASSIFICATION OF SUBJECT MATTER |
| --- | --- |

**H04L 1/00**(2006.01)i; **H04L 1/18**(2006.01)i; **H04L 5/00**(2006.01)i

According to International Patent Classification (IPC) or to both national classification and IPC

| B. | FIELDS SEARCHED |
| --- | --- |

Minimum documentation searched (classification system followed by classification symbols)

H04L 1/00(2006.01); H04W 24/08(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: LBRM(limited buffer rate matching), 최대 레이어 수(the maximum number of layers), TBS(transport block size), 서빙 셀(serving cell), BWP(bandwidth part)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X<br>Y | QUALCOMM INCORPORATED. Adaptation of maximum number of MIMO Layers. R1-1911131, 3 GPP TSG RAN WG1 #98bis. Chongqing, China. 05 October 2019.<br>See sections 2.1 and 2.2.2. | 1,4-5,9,12-13<br>2-3,6-8,10-11,14-15 |
| Y | ERICSSON. MIMO layers configuration per BWP. R1-1911011, 3GPP TSG RAN WG1 Meeting #98bis. Chongqing, China. 05 October 2019.<br>See section 2.2. | 2-3,6-8,10-11,14-15 |
| X | ZTE. On UE Adaptation to Maximum Number of MIMO Layer. R1-1910183, 3GPP TSG RAN WG1 #98 bis. Chongqing, China. 05 October 2019.<br>See section 2. | 1,5,9,13 |
| X | INTEL CORPORATION. Discussion on UE adaptation to maximum number of MIMO layers. R1-191067 3, 3GPP TSG RAN WG1 #98bis. Chongqing, China. 05 October 2019.<br>See section 2. | 1,5,9,13 |
| A | US 2019-0159049 A1 (SAMSUNG ELECTRONICS CO., LTD.) 23 May 2019 (2019-05-23)<br>See paragraphs [0367]-[0370]. | 1-15 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 April 2021** | **08 April 2021** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/019128**

| Patent document cited in search report | Publication date (day/month/year) | Patent family member(s) | | Publication date (day/month/year) |
|---|---|---|---|---|
| US 2019-0159049 A1 | 23 May 2019 | CN 104823387 | A | 05 August 2015 |
| | | CN 104823387 | B | 30 January 2018 |
| | | CN 104823388 | A | 05 August 2015 |
| | | CN 104823388 | B | 17 August 2018 |
| | | CN 107911868 | A | 13 April 2018 |
| | | CN 108900226 | A | 27 November 2018 |
| | | CN 109039398 | A | 18 December 2018 |
| | | EP 2739107 | A1 | 04 June 2014 |
| | | EP 2739107 | B1 | 02 January 2019 |
| | | EP 2739108 | A1 | 04 June 2014 |
| | | EP 2739108 | B1 | 02 January 2019 |
| | | EP 3493631 | A1 | 05 June 2019 |
| | | EP 3506704 | A1 | 03 July 2019 |
| | | JP 2016-502816 | A | 28 January 2016 |
| | | JP 6396918 | B2 | 26 September 2018 |
| | | KR 10-2014-0074161 | A | 17 June 2014 |
| | | KR 10-2117024 | B1 | 01 June 2020 |
| | | US 2014-0146697 | A1 | 29 May 2014 |
| | | US 2014-0146907 | A1 | 29 May 2014 |
| | | US 2015-0304004 | A1 | 22 October 2015 |
| | | US 2016-0020839 | A1 | 21 January 2016 |
| | | US 2016-0020840 | A1 | 21 January 2016 |
| | | US 2016-0112890 | A1 | 21 April 2016 |
| | | US 9078163 | B2 | 07 July 2015 |
| | | US 9253670 | B2 | 02 February 2016 |
| | | US 9794814 | B2 | 17 October 2017 |
| | | US 9998938 | B2 | 12 June 2018 |
| | | WO 2014-084638 | A1 | 05 June 2014 |
| | | WO 2014-084640 | A1 | 05 June 2014 |

Form PCT/ISA/210 (patent family annex) (July 2019)